# EUROPEAN PATENT SPECIFICATION

(11) **EP 3 276 843 B1**
(45) Date of publication and mention of the grant of the patent: **01.01.2020**
(21) Application number: 15888202.7
(22) Date of filing: 10.04.2015
(51) Int. Cl.: H04B 7/26, H04W 74/02, H04W 74/08

(54) **DATA TRANSMISSION METHOD AND DEVICE, AND TRANSCEIVER**
DATENÜBERTRAGUNGSVERFAHREN UND -VORRICHTUNG SOWIE SENDEEMPFÄNGER
PROCÉDÉ ET DISPOSITIF DE TRANSMISSION DE DONNÉES, ET ÉMETTEUR-RÉCEPTEUR

(43) Date of publication of application: 31.01.2018
(73) Proprietor: Huawei Technologies Co., Ltd., Longgang District Shenzhen, Guangdong 518129 (CN)
(72) Inventor: LIU, Sheng, Shenzhen Guangdong 518129 (CN)
(74) Representative: Pfenning, Meinig & Partner mbB
(86) International application number: PCT/CN2015/076356
(87) International publication number: WO 2016/161646

(56) References cited:
- CN-A- 1 647 404
- CN-A- 103 139 790
- CN-U- 203 951 468
- US-A1- 2013 155 912
- US-A1- 2014 211 686
- US-B2- 8 295 209

## Description

### TECHNICAL FIELD

The present invention relates to the communications field, and in particular, to a data transmission method, a device, and a transceiver.

### BACKGROUND

In an existing wireless local access network (Wireless local Access Network, WLAN) system, a WLAN device uses a channel by means of time division multiplex to transmit data, that is, uplink transmission and downlink transmission occur within different time periods on one channel. In other words, only uplink transmission or downlink transmission can be performed at a time point on one channel, and a transmit path and a receive path in the existing WLAN system always work alternately. When the transmit path is used to transmit a signal, the receive path of the WLAN device is in an idle state; when the receive path is used to receive a signal, the transmit path of the WLAN device is in an idle state.

Therefore, usage of the transmit path and the receive path in the prior art is low, and a throughput of the existing WLAN system is low.

US Patent No. 8,295,209 B2 discloses a frame structure with flexible partition boundary for wireless networks and an apparatus configured to transmit a downlink subframe of a frequency division duplex frame to one or more mobile stations each assigned to a group, wherein the subframe includes portions for each group and a flexible subframe boundary.

US 2014/0211686 A1 discloses a channel selection method for a multiband WiFi access network with channel sharing between access points of the WiFi network.

### SUMMARY

The subject matter of the present invention is defined by the appended claims. The further examples called embodiments in the description are illustrative examples and not embodiments claimed in the present application. Said embodiments and examples of the present invention provide a data transmission method, a device, and a transceiver. The method can increase a throughput of a WLAN system.

A first aspect provides a data transmission method for an access point, where a transceiver of the access point includes m transmit paths and n receive paths, the method is applied to a wireless local area network WLAN, and the method includes: sending, by the access point, downlink data to at least one first station on a first channel by using at least one of the m transmit paths within a first time; and receiving, by the access point, uplink data sent by at least one second station on a second channel, by using at least one of the n receive paths within the first time; where a start time point and an end time point at which the access point sends the downlink data are respectively the same as those at which the access point receives the uplink data.

With reference to the first aspect, in a first possible implementation manner, the sending, by the access point, downlink data to at least one first station on a first channel by using at least one of the m transmit paths within a first time includes: sending the downlink data to the at least one first station on the first channel by using the m transmit paths within the first time; and receiving, by the access point, uplink data sent by at least one second station on a second channel, by using at least one of the n receive paths within the first time includes: receiving, by the access point, uplink data sent by at least one second station on a second channel, by using the n receive paths within the first time.

With reference to the first aspect or the first possible implementation manner, in a second possible implementation manner, the method further includes: performing, by the access point, uplink or downlink transmission on the first channel within a preset time; and performing, by the access point, uplink or downlink transmission on the second channel within the preset time, where the preset time is a time other than the first time, and when the access point performs uplink transmission on the first channel within the preset time, the access point performs downlink transmission on the second channel within the preset time, or when the access point performs downlink transmission on the first channel within the preset time, the access point performs uplink transmission on the second channel within the preset time.

With reference to the second possible implementation manner, in a third possible implementation manner, the preset time includes a second time, the second time is a time before a start time point of the first time, and the performing, by the access point, uplink or downlink transmission on the first channel within a preset time includes: performing, by the access point, clear channel assessment (CCA) by using a first receive path within the second time and determining that the first channel is idle; and the performing, by the access point, uplink or downlink transmission on the second channel within the preset time includes: using, by the access point, a second receive path within the second time to: perform CCA detection on the second channel, and determine that the second channel is idle, where the first receive path is at least one of any n-1 receive paths of the n receive paths, and the second receive path is at least one of the n receive paths except the first receive path.

With reference to the third possible implementation manner, in a fourth possible implementation manner, the preset time further includes a third time, and the third time is a time that is before the start time point of the first time and that is after an end time point of the second time; the performing, by the access point, uplink or downlink transmission on the first channel within a preset time further includes: sending, by the access point, a first triggering frame to the at least one first station on the first channel by using a first transmit path within the third time, where the first triggering frame is used to instruct the at least one first station to receive, on the first channel within the first time, the downlink data sent by the access point; and the performing, by the access point, uplink or downlink transmission on the second channel within the preset time further includes: sending, by the access point, a second triggering frame to the at least one second station on the second channel by using a second transmit path within the third time, where the second triggering frame is used to instruct the at least one second station to send the uplink data to the access point on the second channel within the first time, the first transmit path is at least one of any m-1 transmit paths of the m transmit paths, and the second transmit path is at least one of the m transmit paths except the first transmit path.

With reference to the fourth possible implementation manner, in a fifth possible implementation manner, the first triggering frame includes first scheduling control information, where the first scheduling control information includes: an identifier of each station of the at least one first station, a transmission resource used by the at least one first station to transmit data, a quantity of spatial flows, identifiers of the corresponding spatial flows, and modulation and coding scheme MCS information used for transmitting the corresponding spatial flows, and the first scheduling control information is located in a MAC protocol data unit PDU in a high-efficiency signaling-B field HE-SIG-B or a data field at a physical layer of the first triggering frame; and the second triggering frame includes second scheduling control information, where the second scheduling control information includes: an identifier of each station of the at least one second station, a transmission resource used by the at least one second station to transmit data, a quantity of spatial flows, identifiers of the corresponding spatial flows, and modulation and coding scheme MCS information used for transmitting the corresponding spatial flows, and the second scheduling control information is located in a MAC protocol data unit PDU in a high-efficiency signaling-B field HE-SIG-B or a data field at a physical layer of the second triggering frame.

With reference to the fourth or fifth possible implementation manner, in a sixth possible implementation manner, the preset time further includes a fourth time, the fourth time is a time after an end time point of the first time, and the performing, by the access point, uplink or downlink transmission on the first channel within a preset time further includes: using, by the access point, at least one of the n receive paths within the fourth time to receive, on the first channel, a first acknowledgement message sent by the at least one first station, where the first acknowledgement message is used to indicate that the at least one first station has correctly received the downlink data; and the performing, by the access point, uplink or downlink transmission on the second channel within the preset time further includes: using, by the access point, at least one of the m transmit paths within the fourth time to send a second acknowledgement message to the at least one second station on the second channel, where the second acknowledgement message is used to indicate that the access point has correctly received the uplink data.

With reference to the sixth possible implementation manner, in a seventh possible implementation manner, the preset time further includes a fifth time and a sixth time, the fifth time is a time after an end time point of the fourth time, and the sixth time is a time after an end time point of the fifth time; the first triggering frame is further used to instruct at least one third station to send third uplink data to the access point on the first channel within the fifth time; the second triggering frame is further used to instruct at least one fourth station to receive, on the second channel within the fifth time, fourth downlink data sent by the access point; the performing, by the access point, uplink or downlink transmission on the first channel within a preset time further includes: using, by the access point, at least one of the n receive paths within the fifth time to receive, on the first channel, the third uplink data sent by the at least one third station; and using, by the access point, at least one of the m transmit paths within the sixth time to send a third acknowledgement message to the at least one third station on the first channel, where the third acknowledgement message is used to indicate that the access point has correctly received the third uplink data; and the performing, by the access point, uplink or downlink transmission on the second channel within the preset time further includes: using, by the access point, at least one of the m transmit paths within the fifth time to send the fourth downlink data to the at least one fourth station on the second channel; and using, by the access point, at least one of the n receive paths within the sixth time to receive, on the second channel, a fourth acknowledgement message sent by the at least one fourth station, where the fourth acknowledgement message is used to indicate that the at least one fourth station has correctly received the fourth downlink data.

With reference to any one of the first aspect, or the first to the seventh possible implementation manners, in an eighth possible implementation manner, a preamble of a data frame of the uplink data includes a legacy preamble, a high-efficiency signaling-A field HE-SIG-A, a high-efficiency short training field HE-STF, and a high-efficiency long training field HE-LTF, and does not include a high-efficiency signaling-B field HE-SIG-B; and a preamble of a data frame of the downlink data includes a legacy preamble, a high-efficiency signaling-A field HE-SIG-A, a high-efficiency short training field HE-STF, and a high-efficiency long training field HE-LTF, and does not include a high-efficiency signaling-B field HE-SIG-B.

With reference to any one of the first aspect, or the first to the eighth possible implementation manners, in a ninth possible implementation manner, the first channel is a channel with any contiguous or non-contiguous frequency spectra in frequency bands of 5490-5710 MHz and 5735-5835 MHz, and the second channel is a channel with any contiguous or non-contiguous frequency spectra in a frequency band of 5170-5330 MHz.

With reference to any one of the first aspect, or the first to the eighth possible implementation manners, in a tenth possible implementation manner, the first channel is a channel with any contiguous or non-contiguous frequency spectra in frequency bands of 5570-5710 MHz, 5735-5835 MHz, and 5850-5925 MHz, and the second channel is a channel with any contiguous or non-contiguous frequency spectra in frequency bands of 5170-5330 MHz and 5350-5430 MHz.

A second aspect provides a data transmission method for a station, where a transceiver of the station includes k transmit paths and z receive paths, the method is applied to a wireless local area network WLAN, and the method includes: receiving , by the station, downlink data sent by an access point on a first channel by using at least one of the z receive paths within a first time; and sending, by the station, uplink data to the access point on a second channel by using at least one of the K transmit paths within the first time1.

With reference to the second aspect, in a first possible implementation manner, the using, by the station, at least one of the z receive paths within a first time to receive, on a first channel, downlink data sent by an access point includes: using, by the station, the z receive paths within the first time to receive, on the first channel, the downlink data sent by the access point; and the using, by the station, at least one of the k transmit paths within the first time to send uplink data to the access point on a second channel includes: using, by the station, the k transmit paths within the first time to send the uplink data to the access point on the second channel.

With reference to the second aspect or the first possible implementation manner of the second aspect, in a second possible implementation manner, the method further includes: performing, by the station, uplink or downlink transmission on the first channel within a preset time; and performing, by the station, uplink or downlink transmission on the second channel within the preset time, where when the station performs uplink transmission on the first channel within the preset time, the station performs downlink transmission on the second channel within the preset time, or when the station performs downlink transmission on the first channel within the preset time, the station performs uplink transmission on the second channel within the preset time.

With reference to the second possible implementation manner of the second aspect, in a third possible implementation manner, the preset time includes a third time, and the third time is a time before a start time point of the first time; the performing, by the station, uplink or downlink transmission on the first channel within a preset time includes: using, by the station, a first receive path within the third time to receive, on the first channel, a first triggering frame sent by the access point, where the first triggering frame is used to instruct the station to receive, on the first channel within the first time, the downlink data sent by the access point; and the performing, by the station, uplink or downlink transmission on the second channel within the preset time includes: using, by the station, a second receive path within the third time to receive, on the second channel, a second triggering frame sent by the access point, where the second triggering frame is used to instruct the station to send the uplink data to the access point on the second channel within the first time, where the first receive path is at least one of any z-1 receive paths of the z receive paths, and the second receive path is at least one of the z receive paths except the first receive path.

With reference to the third possible implementation manner of the second aspect, in a fourth possible implementation manner, the first triggering frame includes first scheduling control information, where the first scheduling control information includes: an identifier of the station, a transmission resource used by the station to transmit data, a quantity of spatial flows, identifiers of the corresponding spatial flows, and modulation and coding scheme MCS information used for transmitting the corresponding spatial flows, and the first scheduling control information is located in a MAC protocol data unit PDU in a high-efficiency signaling-B field HE-SIG-B or a data field at a physical layer of the triggering frame; and the second triggering frame includes second scheduling control information, where the second scheduling control information includes: an identifier of the station, a transmission resource used by the station to transmit data, a quantity of spatial flows, identifiers of the corresponding spatial flows, and modulation and coding scheme MCS information used for transmitting the corresponding spatial flows, and the second scheduling control information is located in a MAC protocol data unit PDU in a high-efficiency signaling-B field HE-SIG-B or a data field at a physical layer of the triggering frame.

With reference to the third or fourth possible implementation manner of the second aspect, in a fifth possible implementation manner, the preset time further includes a fourth time, and the fourth time is a time after an end time point of the first time; the performing, by the station, uplink or downlink transmission on the first channel within a preset time further includes: using, by the station, at least one of the k transmit paths within the fourth time to send a first acknowledgement message to the access point on the first channel, where the first acknowledgement message is used to indicate that the station has correctly received the downlink data; and the performing, by the station, uplink or downlink transmission on the second channel within the preset time further includes: using, by the access point, at least one of the z receive paths within the fourth time to receive, on the second channel, a second acknowledgement message sent by the access point, where the second acknowledgement message is used to indicate that the access point has correctly received the uplink data.

With reference to the fifth possible implementation manner of the second aspect, in a sixth possible implementation manner, the preset time further includes a fifth time and a sixth time, the fifth time is a time after an end time point of the fourth time, and the sixth time is a time after an end time point of the fifth time; the first triggering frame is further used to instruct the station to send third uplink data to the access point on the first channel within the fifth time; the second triggering frame is further used to instruct the station to receive, on the second channel within the fifth time, fourth downlink data sent by the access point; the performing, by the station, uplink or downlink transmission on the first channel within a preset time further includes: using, by the station, at least one of the k transmit paths within the fifth time to send the third uplink data to the access point on the first channel; and using, by the station, at least one of the z receive paths within the sixth time to receive, on the first channel, a third acknowledgement message sent by the access point, where the third acknowledgement message is used to indicate that the access point has correctly received the third uplink data; and the performing, by the station, uplink or downlink transmission on the second channel within the preset time further includes: using, by the station, at least one of the z receive paths within the fifth time to receive, on the second channel, the fourth downlink data sent by the access point; and using, by the station, at least one of the k transmit paths within the sixth time to send a fourth acknowledgement message to the access point on the second channel, where the fourth acknowledgement message is used to indicate that the station has correctly received the fourth downlink data.

With reference to any one of the second aspect, or the first to the sixth possible implementation manners, in a seventh possible implementation manner, a preamble of a data frame of the uplink data includes a legacy preamble, a high-efficiency signaling-A field HE-SIG-A, a high-efficiency short training field HE-STF, and a high-efficiency long training field HE-LTF, and does not include a high-efficiency signaling-B field HE-SIG-B; and a preamble of a data frame of the downlink data includes a legacy preamble, a high-efficiency signaling-A field HE-SIG-A, a high-efficiency short training field HE-STF, and a high-efficiency long training field HE-LTF, and does not include a high-efficiency signaling-B field HE-SIG-B.

With reference to any one of the second aspect, or the first to the seventh possible implementation manners, in an eighth possible implementation manner, the first channel is a channel with any contiguous or non-contiguous frequency spectra in frequency bands of 5490-5710 MHz and 5735-5835 MHz, and the second channel is a channel with any contiguous or non-contiguous frequency spectra in a frequency band of 5170-5330 MHz.

With reference to any one of the second aspect, or the first to the seventh possible implementation manners, in a ninth possible implementation manner, the first channel is a channel with any contiguous or non-contiguous frequency spectra in frequency bands of 5570-5710 MHz, 5735-5835 MHz, and 5850-5925 MHz, and the second channel is a channel with any contiguous or non-contiguous frequency spectra in frequency bands of 5170-5330 MHz and 5350-5430 MHz.

A third aspect provides an access point, where the access point includes: a transceiver, where the transceiver includes m transmit paths and n receive paths; a sending unit, configured to use at least one of the m transmit paths within a first time to send downlink data to at least one first station on a first channel; and a receiving unit, configured to use at least one of the n receive paths within the first time to receive, on a second channel, uplink data sent by at least one second station, where a start time point and an end time point at which the sending unit sends the downlink data are respectively the same as those at which the receiving unit receives the uplink data.

With reference to the third aspect, in a first possible implementation manner, the sending unit uses the m transmit paths within the first time to send the downlink data to the at least one first station on the first channel; and the receiving unit uses the n receive paths within the first time to receive, on the second channel, the uplink data sent by the at least one second station.

With reference to the third aspect or the first possible implementation manner of the third aspect, in a second possible implementation manner, the access point further includes: a first transmission unit, configured to perform uplink or downlink transmission on the first channel within a preset time; and a second transmission unit, configured to perform uplink or downlink transmission on the second channel within the preset time, where the preset time is a time other than the first time, and when the first transmission unit performs uplink transmission on the first channel within the preset time, the second transmission unit performs downlink transmission on the second channel within the preset time, or when the first transmission unit performs downlink transmission on the first channel within the preset time, the second transmission unit performs uplink transmission on the second channel within the preset time.

With reference to the second possible implementation manner of the third aspect, in a third possible implementation manner, the preset time includes a second time, and the second time is a time before a start time point of the first time; the first transmission unit uses a first receive path within the second time to: perform clear channel assessment CCA detection on the first channel, and determine that the first channel is idle; and the second transmission unit uses a second receive path within the second time to: perform CCA detection on the second channel, and determine that the second channel is idle, where the first receive path is at least one of any n-1 receive paths of the n receive paths, and the second receive path is at least one of the n receive paths except the first receive path.

With reference to the third possible implementation manner of the third aspect, in a fourth possible implementation manner, the preset time further includes a third time, and the third time is a time that is before the start time point of the first time and that is after an end time point of the second time; the first transmission unit is further configured to use a first transmit path within the third time to send a first triggering frame to the at least one first station on the first channel, where the first triggering frame is used to instruct the at least one first station to receive, on the first channel within the first time, the downlink data sent by the access point; and the second transmission unit is further configured to use a second transmit path within the third time to send a second triggering frame to the at least one second station on the second channel, where the second triggering frame is used to instruct the at least one second station to send the uplink data to the access point on the second channel within the first time, the first transmit path is at least one of any m-1 transmit paths of the m transmit paths, and the second transmit path is at least one of the m transmit paths except the first transmit path.

With reference to the fourth possible implementation manner of the third aspect, in a fifth possible implementation manner, the first triggering frame includes first scheduling control information, where the first scheduling control information includes: an identifier of each station of the at least one first station, a transmission resource used by the at least one first station to transmit data, a quantity of spatial flows, identifiers of the corresponding spatial flows, and modulation and coding scheme MCS information used for transmitting the corresponding spatial flows, and the first scheduling control information is located in a MAC protocol data unit PDU in a high-efficiency signaling-B field HE-SIG-B or a data field at a physical layer of the first triggering frame; and the second triggering frame includes second scheduling control information, where the second scheduling control information includes: an identifier of each station of the at least one second station, a transmission resource used by the at least one second station to transmit data, a quantity of spatial flows, identifiers of the corresponding spatial flows, and modulation and coding scheme MCS information used for transmitting the corresponding spatial flows, and the second scheduling control information is located in a MAC protocol data unit PDU in a high-efficiency signaling-B field HE-SIG-B or a data field at a physical layer of the second triggering frame.

With reference to the fourth or fifth possible implementation manner of the third aspect, in a sixth possible implementation manner, the preset time further includes a fourth time, and the fourth time is a time after an end time point of the first time; the first transmission unit is further configured to use at least one of the n receive paths within the fourth time to receive, on the first channel, a first acknowledgement message sent by the at least one first station, where the first acknowledgement message is used to indicate that the at least one first station has correctly received the downlink data; and the second transmission unit is further configured to use at least one of the m transmit paths within the fourth time to send a second acknowledgement message to the at least one second station on the second channel, where the second acknowledgement message is used to indicate that the access point has correctly received the uplink data.

With reference to the sixth possible implementation manner of the third aspect, in a seventh possible implementation manner, the preset time further includes a fifth time and a sixth time, the fifth time is a time after an end time point of the fourth time, and the sixth time is a time after an end time point of the fifth time; the first triggering frame is further used to instruct at least one third station to send third uplink data to the access point on the first channel within the fifth time; the second triggering frame is further used to instruct at least one fourth station to receive, on the second channel within the fifth time, fourth downlink data sent by the access point; the first transmission unit is further configured to: use at least one of the n receive paths within the fifth time to receive, on the first channel, the third uplink data sent by the at least one third station; and use at least one of the m transmit paths within the sixth time to send a third acknowledgement message to the at least one third station on the first channel, where the third acknowledgement message is used to indicate that the access point has correctly received the third uplink data; and the second transmission unit is further configured to: use at least one of the m transmit paths within the fifth time to send the fourth downlink data to the at least one fourth station on the second channel; and use at least one of the n receive paths within the sixth time to receive, on the second channel, a fourth acknowledgement message sent by the at least one fourth station, where the fourth acknowledgement message is used to indicate that the at least one fourth station has correctly received the fourth downlink data.

With reference to any one of the third aspect, or the first to the seventh possible implementation manner of the third aspect, in an eighth possible implementation manner, a preamble of a data frame of the uplink data includes a legacy preamble, a high-efficiency signaling-A field HE-SIG-A, a high-efficiency short training field HE-STF, and a high-efficiency long training field HE-LTF, and does not include a high-efficiency signaling-B field HE-SIG-B; and a preamble of a data frame of the downlink data includes a legacy preamble, a high-efficiency signaling-A field HE-SIG-A, a high-efficiency short training field HE-STF, and a high-efficiency long training field HE-LTF, and does not include a high-efficiency signaling-B field HE-SIG-B.

With reference to any one of the third aspect, or the first to the eighth possible implementation manners of the third aspect, in a ninth possible implementation manner, the first channel is a channel with any contiguous or non-contiguous frequency spectra in frequency bands of 5490-5710 MHz and 5735-5835 MHz, and the second channel is a channel with any contiguous or non-contiguous frequency spectra in a frequency band of 5170-5330 MHz.

With reference to any one of the third aspect, or the first to the eighth possible implementation manners of the third aspect, in a tenth possible implementation manner, the first channel is a channel with any contiguous or non-contiguous frequency spectra in frequency bands of 5570-5710 MHz, 5735-5835 MHz, and 5850-5925 MHz, and the second channel is a channel with any contiguous or non-contiguous frequency spectra in frequency bands of 5170-5330 MHz and 5350-5430 MHz.

A fourth aspect provides a station, including: a transceiver, where the transceiver includes k transmit paths and z receive paths; a receiving unit, configured to use at least one of the z receive paths within a first time to receive, on a first channel, downlink data sent by an access point; and a sending unit, configured to use at least one of the K transmit paths within the first time to send uplink data to the access point on a second channel.

With reference to the fourth aspect, in a first possible implementation manner, the receiving unit uses the z receive paths within the first time to receive, on the first channel, the downlink data sent by the access point; and the sending unit uses the k transmit paths within the first time to send the uplink data to the access point on the second channel, where a start time point and an end time point at which the receiving unit receives the downlink data are respectively the same as those at which the sending unit sends the uplink data.

With reference to the fourth aspect or the first possible implementation manner of the fourth aspect, in a second possible implementation manner, the station further includes: a first transmission unit, configured to perform uplink or downlink transmission on the first channel within a preset time; and a second transmission unit, configured to perform uplink or downlink transmission on the second channel within the preset time, where the preset time is a time other than the first time, and when the first transmission unit performs uplink transmission on the first channel within the preset time, the second transmission unit performs downlink transmission on the second channel within the preset time, or when the first transmission unit performs downlink transmission on the first channel within the preset time, the second transmission unit performs uplink transmission on the second channel within the preset time.

With reference to the second possible implementation manner of the fourth aspect, in a third possible implementation manner, the preset time includes a third time, and the third time is a time before a start time point of the first time; the first transmission unit uses a first receive path within the third time to receive, on the first channel, a first triggering frame sent by the access point, where the first triggering frame is used to instruct the station to receive, on the first channel within the first time, the downlink data sent by the access point; and the second transmission unit uses a second receive path within the third time to receive, on the second channel, a second triggering frame sent by the access point, where the second triggering frame is used to instruct the station to send the uplink data to the access point on the second channel within the first time, where the first receive path is at least one of any z-1 receive paths of the z receive paths, and the second receive path is at least one of the z receive paths except the first receive path.

With reference to the third possible implementation manner of the fourth aspect, in a fourth possible implementation manner, the first triggering frame includes first scheduling control information, where the first scheduling control information includes: an identifier of the station, a transmission resource used by the station to transmit data, a quantity of spatial flows, identifiers of the corresponding spatial flows, and modulation and coding scheme MCS information used for transmitting the corresponding spatial flows, and the first scheduling control information is located in a MAC protocol data unit PDU in a high-efficiency signaling-B field HE-SIG-B or a data field at a physical layer of the triggering frame; and the second triggering frame includes second scheduling control information, where the second scheduling control information includes: an identifier of the station, a transmission resource used by the station to transmit data, a quantity of spatial flows, identifiers of the corresponding spatial flows, and modulation and coding scheme MCS information used for transmitting the corresponding spatial flows, and the second scheduling control information is located in a MAC protocol data unit PDU in a high-efficiency signaling-B field HE-SIG-B or a data field at a physical layer of the triggering frame.

With reference to the third or fourth possible implementation manner of the fourth aspect, in a fifth possible implementation manner, the preset time further includes a fourth time, and the fourth time is a time after an end time point of the first time; the first transmission unit is further configured to use at least one of the k transmit paths within the fourth time to send a first acknowledgement message to the access point on the first channel, where the first acknowledgement message is used to indicate that the station has correctly received the downlink data; and the second transmission unit is further configured to use at least one of the z receive paths within the fourth time to receive, on the second channel, a second acknowledgement message sent by the access point, where the second acknowledgement message is used to indicate that the access point has correctly received the uplink data.

With reference to the fifth possible implementation manner of the fourth aspect, in a sixth possible implementation manner, the preset time further includes a fifth time and a sixth time, the fifth time is a time after an end time point of the fourth time, and the sixth time is a time after an end time point of the fifth time; the first triggering frame is further used to instruct the station to send third uplink data to the access point on the first channel within the fifth time; the second triggering frame is further used to instruct the station to receive, on the second channel within the fifth time, fourth downlink data sent by the access point; the first transmission unit is further configured to: use at least one of the k transmit paths within the fifth time to send the third uplink data to the access point on the first channel; and use at least one of the z receive paths within the sixth time to receive, on the first channel, a third acknowledgement message sent by the access point, where the third acknowledgement message is used to indicate that the access point has correctly received the third uplink data; and the second transmission unit is further configured to: use at least one of the z receive paths within the fifth time to receive, on the second channel, the fourth downlink data sent by the access point; and use at least one of the k transmit paths within the sixth time to send a fourth acknowledgement message to the access point on the second channel, where the fourth acknowledgement message is used to indicate that the station has correctly received the fourth downlink data.

With reference to any one of the fourth aspect, or the first to the sixth possible implementation manners, in a seventh possible implementation manner, a preamble of a data frame of the uplink data includes a legacy preamble, a high-efficiency signaling-A field HE-SIG-A, a high-efficiency short training field HE-STF, and a high-efficiency long training field HE-LTF, and does not include a high-efficiency signaling-B field HE-SIG-B; and a preamble of a data frame of the downlink data includes a legacy preamble, a high-efficiency signaling-A field HE-SIG-A, a high-efficiency short training field HE-STF, and a high-efficiency long training field HE-LTF, and does not include a high-efficiency signaling-B field HE-SIG-B.

With reference to any one of the fourth aspect, or the first to the seventh possible implementation manners, in an eighth possible implementation manner, the first channel is a channel with any contiguous or non-contiguous frequency spectra in frequency bands of 5490-5710 MHz and 5735-5835 MHz, and the second channel is a channel with any contiguous or non-contiguous frequency spectra in a frequency band of 5170-5330 MHz.

With reference to any one of the fourth aspect, or the first to the seventh possible implementation manners, in a ninth possible implementation manner, the first channel is a channel with any contiguous or non-contiguous frequency spectra in frequency bands of 5570-5710 MHz, 5735-5835 MHz, and 5850-5925 MHz, and the second channel is a channel with any contiguous or non-contiguous frequency spectra in frequency bands of 5170-5330 MHz and 5350-5430 MHz.

A fifth aspect provides a transceiver, including a transmit path and a receive path, and further including: a first phase-locked loop PLL, a second PLL, a multiplexer switch, a channel selection radio frequency switch, and a duplexer, where the multiplexer switch is connected to the first PLL and the second PLL and is configured to provide a local-frequency signal for the transmit path and the receive path, the channel selection radio frequency switch is connected to a PA of the transmit path, an LNA of the receive path, and the duplexer, and is configured to select ports of the duplexer for the transmit path and the receive path, and the duplexer is connected to an antenna, so that the transmit path and the receive path share the antenna.

With reference to the fifth aspect, in a first possible implementation manner, the first PLL and the second PLL respectively provide a first frequency signal and a second frequency signal according to a same reference frequency, the transmit path and the receive path use either the first frequency signal or the second frequency signal to transmit data, and when the transmit path uses the first frequency signal to transmit data, the receive path uses the second frequency signal to transmit data, or when the transmit path uses the second frequency signal to transmit data, the receive path uses the first frequency signal to transmit data.

With reference to the first possible implementation manner of the fifth aspect, in a second possible implementation manner, the duplexer includes a first port, a second port, a third port, a first band-pass filter, and a second band-pass filter, where the first port is connected to the first band-pass filter, the second port is connected to the second band-pass filter, the third port is connected to the first band-pass filter and the second band-pass filter, the first port and the second port are configured to connect to the transmit path and the receive path, the third port is configured to connect to the antenna, the first band-pass filter is configured to conduct the first frequency signal, and the second band-pass filter is configured to conduct the second frequency signal.

With reference to the second possible implementation manner of the fifth aspect, in a third possible implementation manner, when the transmit path uses the first frequency signal to transmit data on a first channel, and the receive path uses the second frequency signal to transmit data on a second channel, an output end of the PA of the transmit path is connected to the first port, and an input end of the LNA of the receive path is connected to the second port; or when the transmit path uses the second frequency signal to transmit data on a second channel, and the receive path uses the first frequency signal to transmit data on a first channel, an output end of the PA of the transmit path is connected to the second port, and an input end of the LNA of the receive path is connected to the first port.

A sixth aspect provides a device, where the device includes the transceiver according to any one of the fifth aspect, or the first to the third possible implementation manners of the fifth aspect.

With reference to the sixth aspect, in a first possible implementation manner, the device is an access point or a station.

Based on the foregoing technical solutions, according to the embodiments of the present invention, an access point uses a transmit path within a first time to send downlink data to at least one first station on a first channel, and the access point uses a receive path within the first time to receive, on a second channel, uplink data sent by at least one second station. In the embodiments of the present invention, uplink transmission and downlink transmission can be performed simultaneously on different channels, so that a transmit path and a receive path work simultaneously, increasing usage of the transmit path and the receive path and increasing a throughput of a system.

### BRIEF DESCRIPTION OF DRAWINGS

To describe the technical solutions in the embodiments of the present invention more clearly, the following briefly describes the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.
FIG. 1 is a scenario diagram of data transmission in a WLAN system;
FIG. 2 is a schematic diagram of a data transmission process in a WLAN;
FIG. 3 is another schematic diagram of a data transmission process in a WLAN;
FIG. 4 is a schematic diagram of available spectrum resources in a 5 GHz unlicensed spectrum;
FIG. 5 is an application scenario diagram according to an embodiment of the present invention;
FIG. 6 is a schematic flowchart of a data transmission method according to an embodiment of the present invention;
FIG. 7 is a schematic flowchart of a data transmission method according to another embodiment of the present invention;
FIG. 8 is a schematic structural diagram of a data frame according to an embodiment of the present invention;
FIG. 9 is a schematic structural diagram of a data frame according to another embodiment of the present invention;
FIG. 10 is a schematic diagram of using a 5 GHz unlicensed spectrum according to an embodiment of the present invention;
FIG. 11 is a schematic diagram of using a 5 GHz unlicensed spectrum according to an embodiment of the present invention;
FIG. 12 is a schematic flowchart of a data transmission method according to another embodiment of the present invention;
FIG. 13 is a schematic flowchart of a data transmission method according to another embodiment of the present invention;
FIG. 14 is a schematic diagram of a data transmission process according to an embodiment of the present invention;
FIG. 15 is a schematic diagram of a data transmission process according to another embodiment of the present invention;
FIG. 16 is a schematic diagram of a data transmission process according to another embodiment of the present invention;
FIG. 17 is a schematic diagram of a data transmission process according to another embodiment of the present invention;
FIG. 18 is a schematic block diagram of an access point according to an embodiment of the present invention;
FIG. 19 is a schematic block diagram of an access point according to another embodiment of the present invention;
FIG. 20 is a schematic block diagram of a station according to an embodiment of the present invention;
FIG. 21 is a schematic block diagram of a station according to another embodiment of the present invention;
FIG. 22 is a schematic block diagram of an access point according to another embodiment of the present invention;
FIG. 23 is a schematic block diagram of a station according to another embodiment of the present invention;
FIG. 24 is a schematic block diagram of a transceiver according to an embodiment of the present invention;
FIG. 25 is a schematic block diagram of a transceiver according to another embodiment of the present invention;
FIG. 26 is a schematic block diagram of a duplexer according to an embodiment of the present invention; and
FIG. 27 is a schematic block diagram of an apparatus according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are a part rather than all of the embodiments of the present invention. All other embodiments obtained by a person of ordinary skill in the art based on the embodiments of the present invention without creative efforts shall fall within the protection scope of the present invention.

The technical solutions of the present invention can be applied to an orthogonal frequency division multiplexing (Orthogonal Frequency Division Multiplexing, OFDM) system, for example, a WLAN system, and in particular, to Wireless Fidelity (Wireless Fidelity, WiFi). A method in the embodiments of the present invention may be further applied to an OFDM system of another type though, and no limitation is imposed thereon in the embodiments of the present invention.

It should be understood that a station (Station, STA) in the embodiments of the present invention may also be referred to as a system, a subscriber unit, an access terminal, a mobile station, a mobile console, a remote station, a remote terminal, a mobile device, a user terminal, a terminal, a wireless communications device, a user agent, a user apparatus, or UE (User Equipment, user equipment). The STA may be a cellular phone, a cordless phone, a Session Initiation Protocol (Session Initiation Protocol, SIP) phone, a wireless local loop (Wireless Local Loop, WLL) station, a personal digital assistant (Personal Digital Assistant, PDA), a handheld device having a wireless local area network (for example, Wi-Fi) communication function, a computing device, or another processing device connected to a wireless modem.

It should be further understood that an access point (Access Point, AP) in the embodiments of the present invention can be configured to: communicate with an access terminal by using a wireless local area network, and transmit data from the access terminal to a network side, or transmit data from a network side to the access terminal.

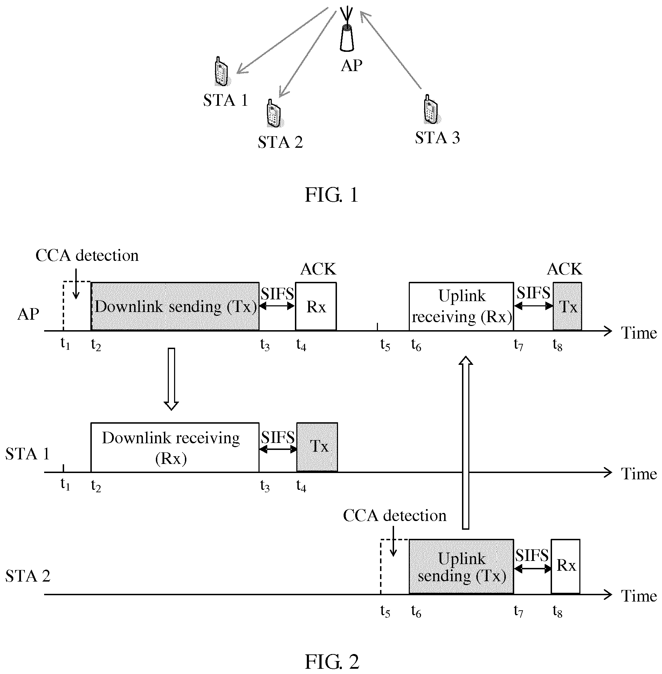

FIG. 1 is a scenario diagram of data transmission in a WLAN system. In the WLAN shown in FIG. 1, an access point (Access Point, AP) is responsible for bidirectional communication with multiple stations (Station, STA). That is, the AP sends (Tx) downlink data to a STA (for example, a STA 1 and/or STA 2 in FIG. 1) within a time, or receives (Rx) uplink data from a STA (for example, a STA 3 in FIG. 1) within another time.

Specifically, in existing OFDM-technology-based WLAN standards such as 802.11a, 802.11n, and 802.11ac, a WLAN device (an AP or a STA) obtains a permission to use a channel by means of carrier sense multiple access (Carrier Sense Multiple Access, CSMA), that is, clear channel assessment (Clear Channel Assessment, CCA) detection is performed before data is sent. Specifically, the WLAN device receives a signal on a channel before sending the data on the channel. Typically, when a signal receiving power exceeds a specified threshold, it is determined that the channel has been occupied by another device; when the signal receiving power does not exceed the specified threshold, it is determined that the channel is in an idle state, and the data starts to be sent on the channel. The channel herein may be contiguous frequency spectra (Frequency Band), and typically, a frequency spectrum with a bandwidth of 20 MHz, 40 MHz, or 80 MHz, or may be non-contiguous frequency spectra, for example, a non-contiguous frequency spectrum with a bandwidth of 160 MHz including two frequency spectra with a bandwidth of 80 MHz spaced at a specified frequency interval. Specifically, interaction between an AP and STAs is described by using FIG. 2 as an example.

FIG. 2 is another schematic diagram of a data transmission process in a WLAN. In the example, an AP starts to perform CCA detection on a channel at a time point t1, starts to send a downlink data frame to a STA 1 at a time point t2 when the AP determines that the channel is idle, and finishes sending the downlink data frame at a time point t3; the STA 1 receives the downlink data frame within a corresponding time, and after a short inter-frame space (Short Inter-frame Space, SIFS) time, sends an acknowledgement (Acknowledgement, ACK) or block acknowledgement (Block Acknowledgement, BA) frame to the AP at a time point t4 if the STA 1 has correctly received the downlink data frame; the AP receives the ACK/BA frame sent by the STA 1, to confirm that the downlink data frame from the AP has been correctly received by the STA 1. In this way, the downlink data transmission operation is finished and the permission to use the channel is released. Similarly, when a STA 2 needs to send uplink data to the AP, the STA 2 performs CCA detection at a time point t5, starts to send an uplink data frame to the AP at a time point t6 if the STA 2 determines that the channel is idle, and finishes sending the uplink data frame at a time point t7; after an SIFS time, the AP sends an ACK/BA frame to the STA 2 at a time point t8 if the uplink data frame is correctly received; after the STA 2 receives the ACK/BA frame, the uplink data frame transmission operation is finished, and the permission to use the channel is released.

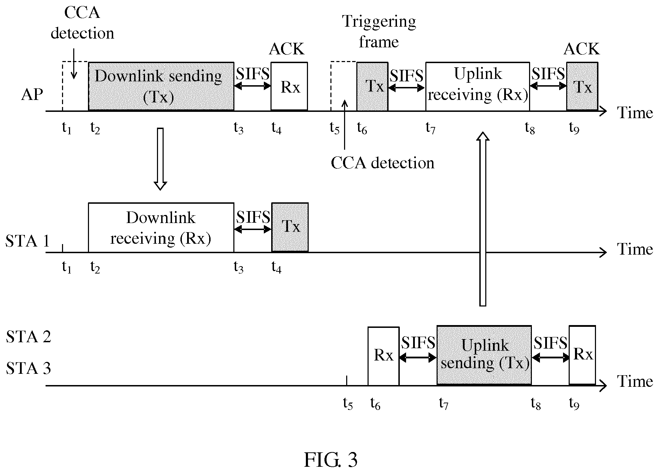

In the next-generation WLAN standard 802.11ax based on orthogonal frequency division multiple access (Orthogonal Frequency-Division Multiple Access, OFDMA), an AP may simultaneously send downlink data to multiple STAs by means of OFDMA, or may simultaneously receive uplink data from multiple STAs by means of OFDMA. In an OFDMA-based WLAN system, to be compatible with an existing WLAN device, an AP still contends for a channel by means of CSMA. That is, the AP performs CCA detection on a channel before using the channel, and if the AP determines that the channel is idle, reserves a period of time as a transmission opportunity (Transmission opportunity, TXOP) for uplink or downlink transmission, or cascaded uplink and downlink transmission. If the AP needs to transmit downlink data to at least one STA, similar to an AP in a CSMA-based WLAN, the AP directly sends a downlink data frame after determining, by means of CCA detection, that a channel is idle, and multiple STAs can be multiplexed together by means of OFDMA for transmission. Different from the CSMA-based WLAN, the STA does not directly initiate uplink transmission by means of channel contention; instead, after contending for a channel, the AP schedules all STAs to perform uplink transmission. As shown in FIG. 3, when scheduling a STA 2 and a STA 3 to transmit uplink data by means of OFDMA, an AP sends a triggering frame after a permission to use a channel is obtained by means of CCA detection. The triggering frame indicates the scheduled STA 2 and STA 3 and resources used by the scheduled STA 2 and STA 3 to transmit the uplink data. As shown in FIG. 3, the AP sends the triggering frame at a time point t6, after an SIFS time, the scheduled STA 2 and STA 3 start to use the resources assigned by the AP, to separately send an uplink data frame at a time point t7, and if the AP has correctly received the uplink data sent by the STA 2 and STA 3, the AP finishes the uplink transmission process after sending an ACK/BA frame. In uplink transmission, a TXOP reserved by the AP includes at least a time from a time point of sending the triggering frame to a time point of completing sending of the ACK/BA frame.

It can be learned from the WLAN transmission processes shown in FIG. 2 and FIG. 3 that, in the CSMA-based WLAN system and the OFDMA-based WLAN system, a WLAN device uses a channel by means of time division duplex, that is, uplink transmission and downlink transmission occur within different time periods on the channel. In other words, when a transmit path is used to transmit a signal, a receive path of the WLAN device is in an idle state; when the receive path is used to receive a signal, the transmit path of the WLAN device is in an idle state. Therefore, throughputs of the WLAN systems are low.

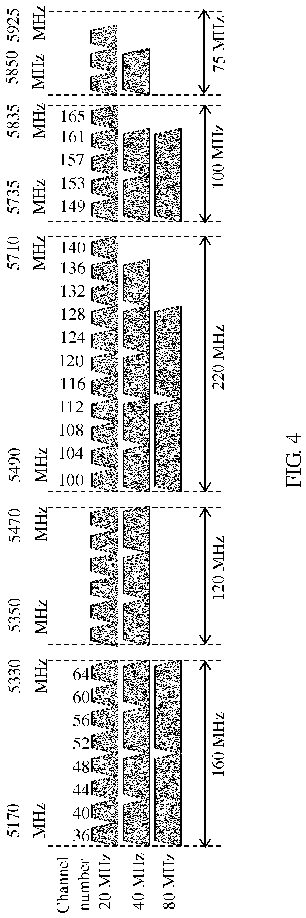

Due to limitation by complexity and costs, WLAN standards including 802.11ac and 802.11ax support a maximum channel bandwidth of 160 MHz and a maximum spatial flow quantity 8. However, most actual WLAN devices support a maximum bandwidth of only 80 MHz. In addition, available spectrum resources in a 5 GHz unlicensed spectrum are very abundant. As shown in FIG. 4, available bandwidths in the 5 GHz unlicensed spectrum may be up to 675 MHz, and specifically include 5170-5330 MHz, 5350-5470 MHz, 5490-5710 MHz, 5735-5835 MHz, and 5850-5925 MHz. In this case, capabilities of a transmit path and a receive path instead of spectrum resources mainly limit a throughput of a WLAN system. However, a transmit path and a receive path in an existing WLAN system always work alternately, and usage of the transmit path and the receive path is low; consequently, transmission performance of the WLAN system is limited. Therefore, the present invention puts forward a WLAN system and a transmission method. Without obviously adding system complexity and costs, a problem of a low system throughput caused by low usage of a transmit path and a receive path in an existing WLAN system can be effectively resolved.

It should be further understood that the access point in the embodiments of the present invention supports parallel (simultaneous) uplink and downlink transmission. A station may support parallel uplink and downlink transmission, or may not support parallel uplink and downlink transmission, and whether the station supports parallel uplink and downlink transmission is specifically determined according to different application scenarios.

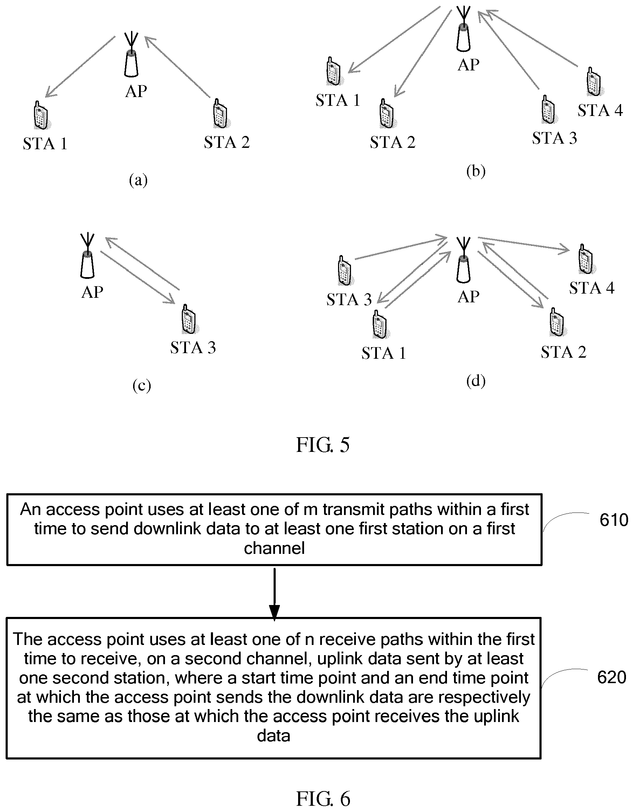

Specifically, FIG. 5 is an application scenario diagram according to an embodiment of the present invention. FIG. 5 shows some typical application scenarios according to this embodiment of the present invention. In FIG. 5(a), only an AP supports parallel uplink and downlink transmission, while STAs do not need to support parallel uplink and downlink transmission. The AP sends downlink data to a STA 1 on a first channel whose carrier frequency is f₀₁ and receives, on a second channel whose carrier frequency is f₀₂, uplink data sent by a STA 2. Similar to FIG. 5(a), in FIG. 5(b), only an AP supports parallel uplink and downlink transmission, while STAs do not need to support parallel uplink and downlink transmission. The AP sends downlink data to a STA 1 and a STA 2 on a first channel whose carrier frequency is f₀₁ and receives, on a second channel whose carrier frequency is f₀₂, uplink data sent by a STA 3 and a STA 4. The STA 1 and the STA 2 can perform multiplexing on the first channel by means of OFDMA and/or downlink multi-user MIMO (Multi-user MIMO, MU-MIMO for short), and the STA 3 and the STA 4 can perform multiplexing on the second channel by means of OFDMA and/or uplink MU-MIMO. In FIG. 5(c), both an AP and a STA 3 support parallel uplink and downlink transmission. The AP sends downlink data to the STA 3 on a first channel whose carrier frequency is f₀₁ and receives, on a second channel whose carrier frequency is f₀₂, uplink data sent by the STA 3. Similar to FIG. 5(c), in FIG. 5(d), an AP, a STA 1, and a STA 2 all support parallel uplink and downlink transmission, while a STA 3 and a STA 4 do not support parallel uplink and downlink transmission. The AP sends downlink data to the STA 1, the STA 2, and the STA 4 on a first channel whose carrier frequency is f₀₁ and receives, on a second channel whose carrier frequency is f₀₂, uplink data sent by the STA 1, the STA 2, and STA 3.

FIG. 6 is a schematic flowchart of a data transmission method according to an embodiment of the present invention. The method shown in FIG. 6 is executed by an access point. A transceiver of the access point includes m transmit paths and n receive paths. The method is applied to a wireless local area network WLAN. Specifically, the method shown in FIG. 6 includes the following steps:

610: The access point uses at least one of the m transmit paths within a first time to send downlink data to at least one first station on a first channel.

620: The access point uses at least one of the n receive paths within the first time to receive, on a second channel, uplink data sent by at least one second station, where a start time point and an end time point at which the access point sends the downlink data are respectively the same as those at which the access point receives the uplink data.

Specifically, the access point in this embodiment of the present invention sends the downlink data to the at least one first station on the first channel within the first time, and simultaneously, the access point receives, on the second channel within the first time, the uplink data sent by the at least one second station.

Therefore, in this embodiment of the present invention, uplink transmission and downlink transmission can be performed simultaneously on different channels, so that a transmit path and a receive path work simultaneously. This can fully use processing capabilities of an existing transmit path and receive path, improving usage of the transmit path and the receive path, and increasing a throughput of a system.

It should be understood that the at least one first station may include one station, or may include multiple stations. When the at least one first station includes multiple stations, the multiple stations may perform multiplexing on the first channel by means of OFDMA and/or downlink multi-user MIMO (Multi-user MIMO, MU-MIMO). Similarly, the at least one second station may include one station, or may include multiple stations. When the at least one second station includes multiple stations, the multiple stations may perform multiplexing on the second channel by means of OFDMA and/or downlink MU-MIMO.

It should be noted that one of the at least one first station and one of the at least one second station may be a same station, or may be different stations, and no limitation is imposed thereon in this embodiment of the present invention.

It should be noted that in step 610, the access point may use some or all of the m transmit paths within the first time to send the downlink data, and in step 620, the access point may use some or all of the n receive paths to receive the uplink data.

It should be understood that the first time mentioned in this embodiment of the present invention is a time between a start (start) time point and an end time point of transmitting data. According to this embodiment of the present invention, the first channel and the second channel are used to perform downlink transmission and uplink transmission within the first time respectively. In other words, according to this embodiment of the present invention, the access point starts to send the downlink data to the at least one first station on the first channel at a start time point of the first time and completes transmission of the downlink data at an end time point of the first time. Simultaneously, the access point starts to receive, on the second channel at the start time point of the first time, the uplink data sent by the at least one second station and completes receiving of the uplink data upon the end time point of the first time. It should be further understood that each time appeared in the following specification represents a time between a start time point of transmitting corresponding data and an end time point of completing transmission of the corresponding data. In other words, in this embodiment of the present invention, for data transmitted on the first channel and the second channel at a same start time point, corresponding end time points are generally the same. That is, transmission times (a time between a start time point and an end time point) for data transmitted on the first channel and the second channel at the same start time point are the same. However, there is also a different case. For example, start time points of transmitting a final ACK frame are the same, but end time points may be different. Details of a specific embodiment will be described in the following specification and are no longer provided herein.

Optionally, in another embodiment, in step 610, the access point uses the m transmit paths within the first time to send the downlink data to the at least one first station on the first channel. In step 620, the access point uses the n receive paths within the first time to receive, on the second channel, the uplink data sent by the at least one second station.

In other words, within the first time, the access point uses all of the m transmit paths to send the downlink data and uses all of the n receive paths to receive the uplink data. Therefore, in this embodiment of the present invention, processing capabilities of an existing transmit path and receive path can be fully used to effectively increase a throughput of a system. Particularly, when *m* = *n*, a maximum throughput of the system can be up to twice that of an existing WLAN system.

It should be understood that in this embodiment of the present invention, either the first channel or the second channel may be used for uplink or downlink transmission within a different time. When the first channel is used to perform uplink transmission within a time, the second channel may be used to perform downlink transmission within the same time, or when the first channel is used to perform downlink transmission within a time, the second channel may be used to perform uplink transmission within the same time.

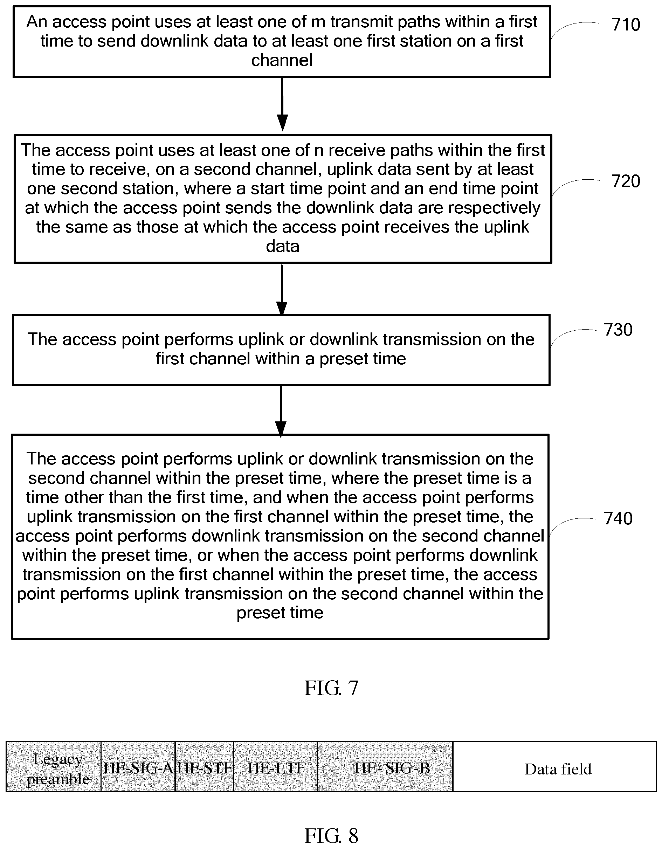

Optionally, in another embodiment, the method in this embodiment of the present invention further includes: performing, by the access point, uplink or downlink transmission on the first channel within a preset time; and performing, by the access point, uplink or downlink transmission on the second channel within the preset time. Specifically, a data transmission method shown in FIG. 7 includes the following steps:

710: The access point uses at least one of the m transmit paths within a first time to send downlink data to at least one first station on a first channel.

720: The access point uses at least one of the n receive paths within the first time to receive, on a second channel, uplink data sent by at least one second station, where a start time point and an end time point at which the access point sends the downlink data are respectively the same as those at which the access point receives the uplink data.

730: The access point performs uplink or downlink transmission on the first channel within a preset time.

740: The access point performs uplink or downlink transmission on the second channel within the preset time, where the preset time is a time other than the first time, and when the access point performs uplink transmission on the first channel within the preset time, the access point performs downlink transmission on the second channel within the preset time, or when the access point performs downlink transmission on the first channel within the preset time, the access point performs uplink transmission on the second channel within the preset time.

It should be noted that step 710 and step 720 are respectively corresponding to step 610 and step 620 in FIG. 6. To avoid repetition, no details are repeated.

In other words, although each channel may be used for uplink or downlink transmission within a different time, when the first channel is used to send data, the second channel is used only to receive data, and vice versa. In this way, for a WLAN device (an access point) that supports parallel transmission and receiving, if a transceiver of the WLAN device includes m transmit paths and n receive paths, where *m* ≥ 2 and *n* ≥ 2, all of the m transmit paths may be used to send data on a first channel, and simultaneously, all of the n receive paths may be used to receive data on a second channel, or all of the m transmit paths may be used to send data on a second channel, and simultaneously, all of the n receive paths may be used to receive data on a first channel. That is, without increasing complexity of a transmit path and a receive path including a path bandwidth and a path quantity, processing capacities of an existing transmit path and receive path can be fully used to effectively increase a throughput of a system. Particularly, when *m* = *n*, a maximum throughput of the system can be up to twice that of an existing WLAN system.

Specifically, in another embodiment, the preset time includes a second time, and the second time is a time before a start time point of the first time. In step 730, the access point uses a first receive path within the second time to: perform clear channel assessment CCA detection on the first channel, and determine that the first channel is idle. In step 740, the access point uses a second receive path within the second time to: perform CCA detection on the second channel, and determine that the second channel is idle. The first receive path is at least one of any n-1 receive paths of the n receive paths, and the second receive path is at least one of the n receive paths except the first receive path.

In other words, the access point device needs to perform CCA detection on the first channel and the second channel before transmitting uplink data and downlink data; determines, by means of CCA detection, that both the first channel and the second channel are idle; and sends the downlink data on the first channel, and simultaneously receives the uplink data on the second channel.

Further, the preset time further includes a third time, and the third time is a time that is before the start time point of the first time and that is after an end time point of the second time.

In step 730, the access point uses a first transmit path within the third time to send a first triggering frame to the at least one first station on the first channel. The first triggering frame is used to instruct the at least one first station to receive, on the first channel within the first time, the downlink data sent by the access point. In step 740, the access point uses a second transmit path within the third time to send a second triggering frame to the at least one second station on the second channel. The second triggering frame is used to instruct the at least one second station to send the uplink data to the access point on the second channel within the first time. The first transmit path is at least one of any m-1 transmit paths of the m transmit paths, and the second transmit path is at least one of the m transmit paths except the first transmit path.

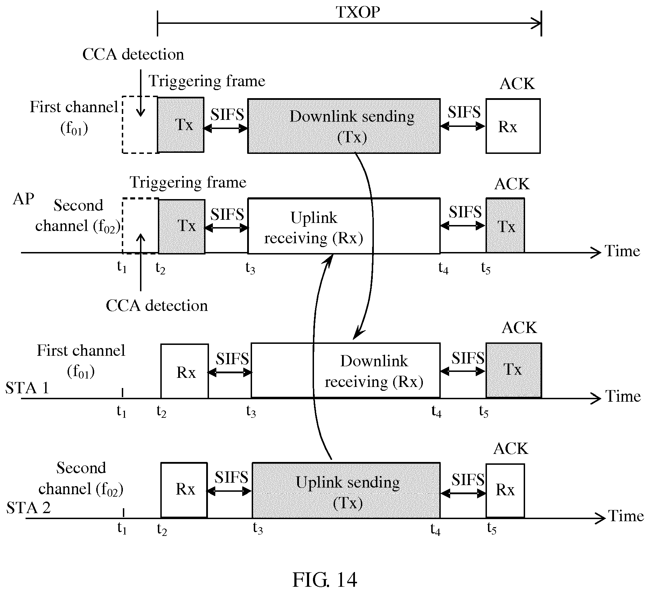

For example, in an example of a scenario shown in FIG. 5(a), an example is used to provide descriptions with reference to FIG. 14. The AP uses a first channel whose carrier frequency is f₀₁ to send downlink data to a STA 1, and simultaneously, uses a second channel whose carrier frequency is f₀₂ to receive uplink data sent by a STA 2. A transceiver of the AP includes m transmit paths and n receive paths. First, the AP uses one to *n*-1 receive paths at a start time point (t₁) of the second time to perform CCA detection on the first channel, and uses at least one of remaining receive paths to perform CCA detection on the second channel. If both the first channel and the second channel are idle, the AP uses one to *m*-1 transmit paths at a start time point (t₂) of the third time to send a first triggering frame on the first channel, so as to send downlink transmission scheduling control information; and simultaneously, uses at least one of remaining transmit paths to send a second triggering frame on the second channel, so as to send uplink transmission scheduling control information Then, after an SIFS, the AP may use, at a start time point (t₃) of the first time, all of the m transmit paths of the AP to send a downlink data frame on the first channel, and completes downlink data transmission at an end time point (t₄) of the first time. The STA 1 performs receiving processing on the downlink data frame according to the downlink transmission scheduling control information sent by using the first triggering frame. Simultaneously, the STA 2 sends, at the time point t₃, an uplink data frame to the AP on the second channel according to the uplink transmission scheduling control information sent by using the second triggering frame, and completes uplink data transmission at the time point t₄. The AP may use all of the n receive paths of the AP to receive the uplink data frame on the second channel.

Optionally, in another embodiment, the first triggering frame includes first scheduling control information. The first scheduling control information includes: an identifier of each station of the at least one first station, a transmission resource used by the at least one first station to transmit data, a quantity of spatial flows, identifiers of the corresponding spatial flows, and modulation and coding scheme MCS information used for transmitting the corresponding spatial flows. The first scheduling control information is located in a MAC protocol data unit (Protocol Data Unit, PDU) in a high-efficiency signaling-B field HE-SIG-B or a data field at a physical layer of the triggering frame.

The second triggering frame includes second scheduling control information. The second scheduling control information includes: an identifier of each station of the at least one second station, a transmission resource used by the at least one second station to transmit data, a quantity of spatial flows, identifiers of the corresponding spatial flows, and modulation and coding scheme MCS information used for transmitting the corresponding spatial flows. The second scheduling control information is located in a MAC protocol data unit PDU in a high-efficiency signaling-B field HE-SIG-B or a data field at a physical layer of the triggering frame.

In an example of implementing parallel uplink and downlink transmission in 802.11ax, a data frame and control frames such as a triggering frame and an ACK/BA frame in an 802.11ax physical layer packet all use a structure shown in FIG. 8. Each 802.11ax physical layer packet includes a preamble (Preamble) and a data field (Data Field). A media access control (Media Access Control, MAC) layer data unit to be transmitted by using the data field may be user data, MAC layer control signaling, or the like. The preamble includes two parts: a legacy preamble (Legacy Preamble) and an 802.11ax-specified preamble. The legacy preamble is a preamble involved in WLAN protocols such as 802.11a, 802.11n, 802.11ac, and 802.11ax, and the 802.11ax-specified preamble is used to transmit 802.11ax-specified physical layer control information and further includes fields such as a high-efficiency signaling-A field (High Efficiency Signal field, HE-SIG-A), a high-efficiency short training field (High Efficiency Short Training field, HE-STF), a high-efficiency long training field (High Efficiency Long Training field, HE-LTF), and a high-efficiency signaling field (High Efficiency Signal field, HE-SIG-B). The present invention involves the HE-SIG-B. The field is used to carry, including but not limited to, the following scheduling control information: identifiers of all STAs that are instructed to transmit data in the packet, transmission resources (for example, sub-carrier resources in a frequency domain) used by all the STAs to transmit the data, a quantity of spatial flows, identifiers of the corresponding spatial flows, and modulation and coding scheme (Modulation Coding Scheme, MCS) information used for transmitting the corresponding spatial flows.

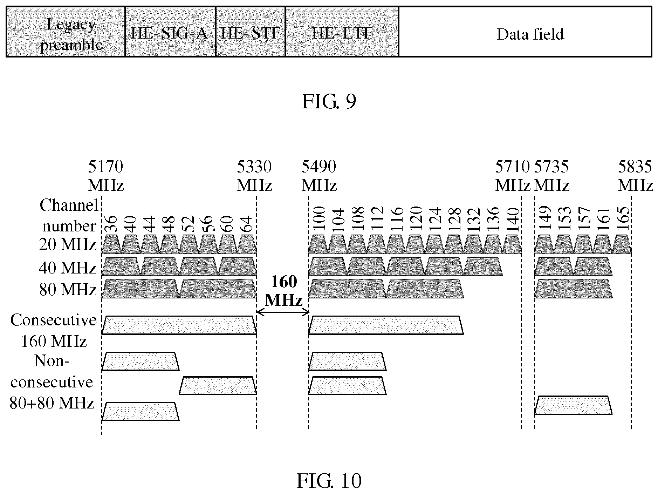

It should be noted that because the downlink transmission scheduling control information has been sent by using the first triggering frame, preferably, a preamble of the downlink data frame in step 610 no longer includes the field HE-SIG-B, as shown in FIG. 9. The STA 1 performs receiving processing on the downlink data frame according to the downlink transmission scheduling control information sent by using the first triggering frame. Simultaneously, the STA 2 sends, at the time point t₃, an uplink data frame to the AP on the second channel according to the uplink transmission scheduling control information sent by using the second triggering frame. The AP may use all of the n receive paths of the AP to receive the uplink data frame on the second channel. Similarly, a preamble of the uplink data frame no longer includes the field HE-SIG-B.

Specifically, as shown in FIG. 9, a preamble of a data frame of the uplink data includes a legacy preamble and fields HE-SIG-A, HE-STF, and HE-LTF, and does not include the field HE-SIG-B. Similarly, a preamble of a data frame of the downlink data includes a legacy preamble and fields HE-SIG-A, HE-STF, and HE-LTF, and does not include the field HE-SIG-B.

Further, in another embodiment, the preset time further includes a fourth time, and the fourth time is a time after an end time point of the first time. In step 730, the access point uses at least one of the n receive paths within the fourth time to receive, on the first channel, a first acknowledgement message sent by the at least one first station. The first acknowledgement message is used to indicate that the at least one first station has correctly received the downlink data. In step 740, the access point uses at least one of the m transmit paths within the fourth time to send a second acknowledgement message to the at least one second station on the second channel. The second acknowledgement message is used to indicate that the access point has correctly received the uplink data.

The first acknowledgement message may be an ACK frame or a BA frame, and the second acknowledgement message may be an ACK frame or a BA frame. For example, in an example of a scenario shown in FIG. 5(a), an example is used to provide descriptions with reference to FIG. 14. After step 610 and step 620, that is, within an SIFS time after transmission of the uplink and downlink data frames is completed, if the STA 1 has correctly received the downlink data frame sent by the AP, the STA 1 sends an uplink ACK/BA frame to the AP at a start time point (t₅) of the fourth time; and simultaneously, if the AP has correctly received the uplink data frame sent by the STA 2, the AP sends a downlink ACK/BA frame to the STA 1 at the time point t₅.

It should be noted that as mentioned above, when start time points for data sending are the same, end time points are also basically the same. However, the end time points herein may be the same, or may be different. As shown in FIG. 14, in this embodiment of the present invention, start time points at which the access point receives the first acknowledgement message and sends the second acknowledgement message are the same. After transmission of the first acknowledgement message and the second acknowledgement message is completed, the access point may not transmit data within a short time. Therefore, an end time point of receiving of the first acknowledgement message may be different from an end time point of sending the second acknowledgement message, and no limitation is imposed thereon in this embodiment of the present invention.

Further, in another embodiment, the preset time further includes a fifth time and a sixth time, the fifth time is a time after an end time point of the fourth time, and the sixth time is a time after an end time point of the fifth time. The first triggering frame is further used to instruct at least one third station to send third uplink data to the access point on the first channel within the fifth time. The second triggering frame is further used to instruct at least one fourth station to receive, on the second channel within the fifth time, fourth downlink data sent by the access point. In step 730, the access point uses at least one of the n receive paths within the fifth time to receive, on the first channel, the third uplink data sent by the at least one third station; the access point uses at least one of the m transmit paths within the sixth time to send a third acknowledgement message to the at least one third station on the first channel. The third acknowledgement message is used to indicate that the access point has correctly received the third uplink data. In step 740, the access point uses at least one of the m transmit paths within the fifth time to send the fourth downlink data to the at least one fourth station on the second channel; the access point uses at least one of the n receive paths within the sixth time to receive, on the second channel, a fourth acknowledgement message sent by the at least one fourth station. The fourth acknowledgement message is used to indicate that the at least one fourth station has correctly received the fourth downlink data.

It should be noted that one of the at least one third station and one of the at least one fourth station may be a same station, or may be different stations. In addition, some or all of a third station, a fourth station, a first station, and a second station may be a same station, or may be mutually different stations. No limitation is imposed thereon in this embodiment of the present invention.

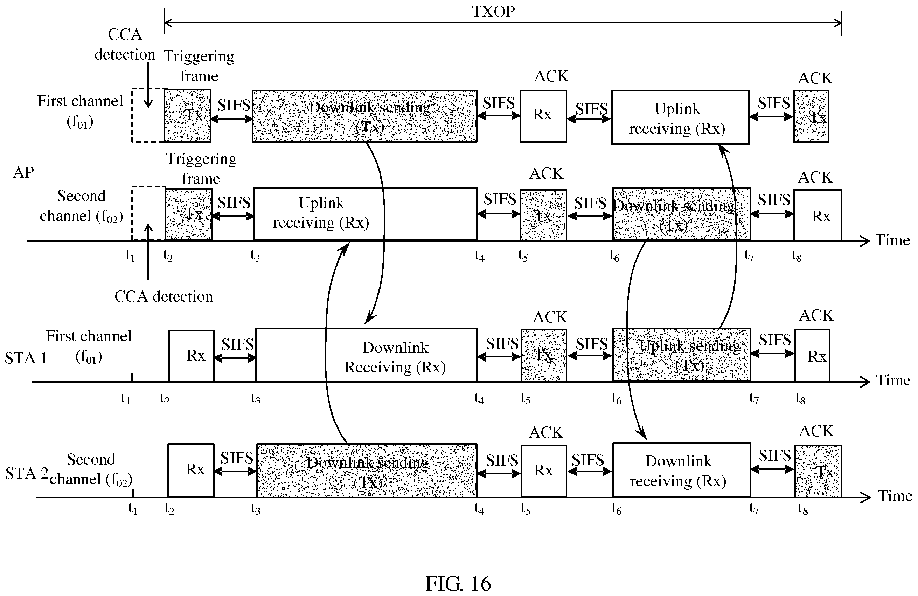

For example, in an example of a scenario shown in FIG. 5(a), an example is used to provide descriptions with reference to FIG. 16. In the example in FIG. 16, at least one first station includes a STA 1, at least one third station includes the STA 1, at least one second station includes a STA 2, and at least one fourth station includes the STA 2. A process shown in FIG. 16 is basically the same as the process shown in FIG. 14 in terms of CCA detection, triggering frame sending, and uplink and downlink data frame transmission. To avoid repetition, no details are repeated. It should be noted that in the example in FIG. 16, after transmitted of a first acknowledgement message and a second acknowledgement message is completed, there is data to be transmitted by an access point within a short time; therefore, a start time point and an end time point of receiving the first acknowledgement message are respectively the same as a start time point and an end time point of sending the second acknowledgement message. After transmission the first acknowledgement message and the second message is completed and after an SIFS time, the access point uses at least one of the n receive paths at a start time point (t₆) of a fifth time to receive, on a first channel, third uplink data sent by the at least one third station, and completes receiving of the third uplink data at an end time point (t₇) of the fifth time. The access point uses at least one of m transmit paths at a start time point (tg) of a sixth time to send a third acknowledgement message to the at least one third station on the first channel. The third acknowledgement message is used to indicate that the access point has correctly received the third uplink data. In addition, the access point uses at least one of the m transmit paths at the time point t₆ to send fourth downlink data to the at least one fourth station on a second channel, and completes sending of the fourth downlink data at the time point t₇. The access point uses at least one of the n receive paths at the time point t₈ to receive, on the second channel, a fourth acknowledgement message sent by the at least one fourth station. The fourth acknowledgement message is used to indicate that the at least one fourth station has correctly received the fourth downlink data. Similarly, after transmission of the third acknowledgement message and the fourth acknowledgement message is completed, there may be no data to be transmitted by the access point within a short time. Therefore, an end time point of sending the third acknowledgement message may be different from an end time point of receiving the fourth acknowledgement message. No limitation is imposed thereon in this embodiment of the present invention.

Optionally, in another embodiment, the first channel is a channel with any contiguous or non-contiguous frequency spectra in frequency bands of 5490-5710 MHz and 5735-5835 MHz, and the second channel is a channel with any contiguous or non-contiguous frequency spectra in a frequency band of 5170-5330 MHz.

For example, FIG. 10 is a schematic diagram of using a 5 GHz unlicensed spectrum according to an embodiment of the present invention. A total bandwidth of a frequency spectrum that can be used in a WLAN is 480 MHz, 5490-5710 MHz and 5735-5835 MHz are used as a frequency band, and 5170-5330 MHz is used as another frequency band. Either the first channel or the second channel is a channel with any contiguous or non-contiguous frequency spectra of the two frequency bands. For example, the first channel and the second channel may be Ch1 and Ch2, Ch3 and Ch4, Ch5 and Ch6, or Ch7 and Ch8. In this way, there may be a guard band with a minimum bandwidth of 160 MHz between the two channels, so as to ensure isolation between a transmit path and a receive path.

Alternatively, in another embodiment, the first channel is a channel with any contiguous or non-contiguous frequency spectra in frequency bands of 5570-5710 MHz, 5735-5835 MHz, and 5850-5925 MHz, and the second channel is a channel with any contiguous or non-contiguous frequency spectra in frequency bands of 5170-5330 MHz and 5350-5430 MHz.

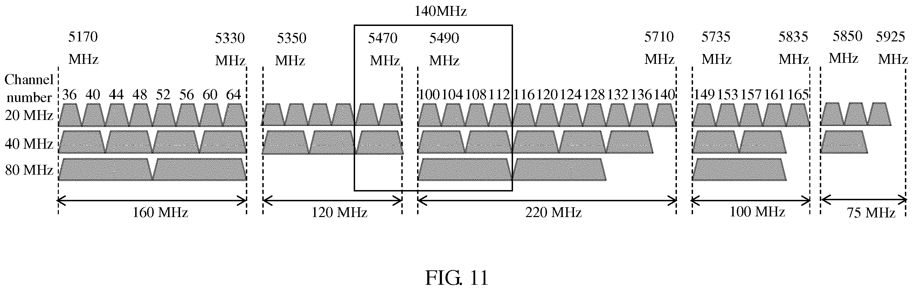

For example, FIG. 11 is a schematic diagram of using a 5 GHz unlicensed spectrum according to another embodiment of the present invention. A total bandwidth of a frequency spectrum that can be used in a WLAN is 675 MHz, and a middle section of frequency spectrum may be selected as a guard band. A channel in the guard band is not used for parallel uplink and downlink transmission, but uses the prior art. Channels in frequency bands on both sides of the guard band are used for parallel uplink and downlink transmission. For example, frequency spectra with a total of 315 MHz including 5570-5710 MHz, 5735-5835 MHz, and 5850-5925 MHz are used as a frequency band, and frequency spectra with a total of 240 MHz including 5170-5330 MHz and 5350-5430 MHz are used as another frequency band, where a frequency spectrum with a total of 140 MHz including 5430-5570 MHz is used as a guard band for parallel uplink and downlink transmission.

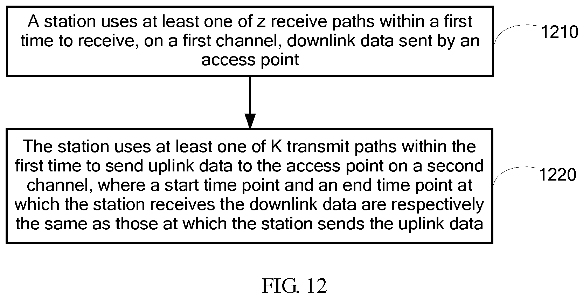

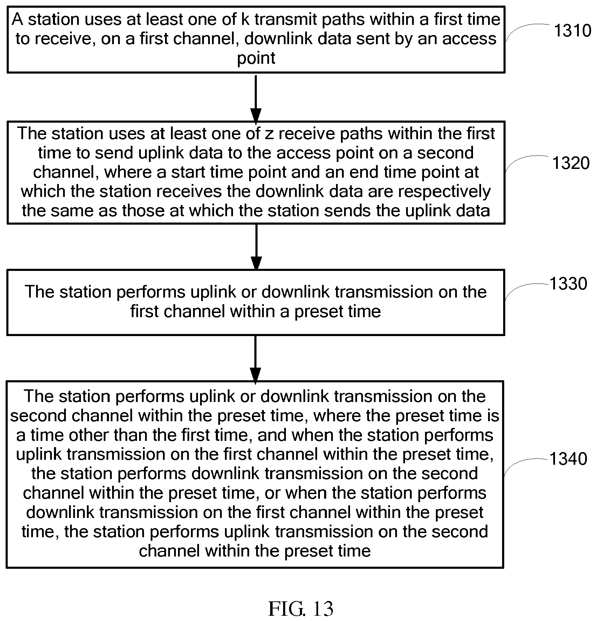

The data transmission method according to the embodiments of the present invention is described in detail in the foregoing from a perspective of an access point with reference to FIG. 1 to FIG. 11. A method for sharing an application between terminals according to an embodiment of the present invention is described in the following from a perspective of a station with reference to FIG. 12 and FIG. 13.

It should be understood that interaction between an access point and a station, related characteristics, functions, and the like described on a station side are corresponding to descriptions on an access point side. For simplicity, repeated descriptions are properly omitted. Only a station that supports parallel transmission and receiving is used as an example for description in FIG. 12 and FIG. 13.

FIG. 12 is a schematic flowchart of a data transmission method according to another embodiment of the present invention. The method shown in FIG. 12 is executed by a station. A transceiver of the station includes k transmit paths and z receive paths. The method is applied to a wireless local area network WLAN. Specifically, the method shown in FIG. 12 includes the following steps:
1210: The station uses at least one of the z receive paths within a first time to receive, on a first channel, downlink data sent by an access point.
1220: The station uses at least one of the K transmit paths within the first time to send uplink data to the access point on a second channel, where a start time point and an end time point at which the station receives the downlink data are respectively the same as those at which the station sends the uplink data.

Specifically, the station in this embodiment of the present invention receives, on the first channel within the first time, the downlink data sent by the access point. Simultaneously, the station sends the uplink data to the access point on the second channel within the first time.

In this embodiment of the present invention, uplink transmission and downlink transmission can be performed simultaneously on different channels, so that a transmit path and a receive path work simultaneously. This can fully use processing capabilities of an existing transmit path and receive path, increasing a throughput of a system.

It should be noted that in step 1210, the station may use some or all of the z receive paths within the first time to receive the downlink data, and in step 1220, the station may use some or all of the k transmit paths to send the uplink data.

Optionally, in another embodiment, in step 1210, the station uses the z receive paths within a first time to send uplink data to an access point on a second channel.

In step 1220, the station uses the k transmit paths within the first time to receive, on a first channel, downlink data sent by the access point.

In other words, within the first time, the station uses all of the z receive paths to receive the downlink data and uses all of the k transmit paths to send the uplink data. Therefore, in this embodiment of the present invention, processing capabilities of an existing transmit path and receive path can be fully used to effectively increase a throughput of a system. Particularly, when *k* = *z,* a maximum throughput of the system can be up to twice that of an existing WLAN system.

It should be understood that in this embodiment of the present invention, either the first channel or the second channel can be used for uplink or downlink transmission within a different time, and when the first channel performs uplink transmission, the second channel may perform downlink transmission, or when the first channel performs downlink transmission, the second channel may perform uplink transmission.

Optionally, in another embodiment, the method in this embodiment of the present invention further includes: performing, by the station, uplink or downlink transmission on the first channel within a preset time; and performing, by the station, uplink or downlink transmission on the second channel within the preset time. Specifically, a data transmission method shown in FIG. 13 includes the following steps:
1310: The station uses at least one of the k transmit paths within a first time to send uplink data to the access point on a second channel.
1320: The station uses at least one of the z receive paths within a first time to receive, on a first channel, downlink data sent by an access point, where a start time point and an end time point at which the station receives the downlink data are respectively the same as those at which the station sends the uplink data.
1330: The station performs uplink or downlink transmission on the first channel within a preset time.
1340: The station performs uplink or downlink transmission on the second channel within the preset time, where the preset time is a time other than the first time, and when the station performs uplink transmission on the first channel within the preset time, the station performs downlink transmission on the second channel within the preset time, or when the station performs downlink transmission on the first channel within the preset time, the station performs uplink transmission on the second channel within the preset time.

It should be noted that step 1310 and step 1320 are respectively corresponding to step 1210 and step 1220 in FIG. 12. To avoid repetition, no details are repeated.

In other words, although each channel may be used for uplink or downlink transmission within a different time, when the first channel is used to send data, the second channel is used only to receive data, and vice versa. In this way, for a WLAN device (a station) that supports parallel transmission and receiving, if a transceiver of the WLAN device includes k transmit paths and z receive paths, where *k* ≥ 2 and *z* ≥ 2, all of the k transmit paths may be used to send data on a first channel, and simultaneously, all of the z receive paths are used to receive data on a second channel, or all of the k transmit paths are used to send data on a second channel, and simultaneously, all of the z receive paths are used to receive data on a first channel. That is, without increasing complexity of a transmit path and a receive path including a path bandwidth and a path quantity, processing capacities of an existing transmit path and receive path can be fully used to effectively increase a throughput of a system. Particularly, when *k* = *z,* a maximum throughput of the system can be up to twice that of an existing WLAN system.

Optionally, in another embodiment, the preset time includes a third time, and the third time is a time before a start time point of the first time.

In step 1330, the station uses a first receive path within the third time to receive, on the first channel, a first triggering frame sent by the access point. The first triggering frame is used to instruct the station to receive, on the first channel within the first time, the downlink data sent by the access point. In step 1340, the station uses a second receive path within the third time to receive, on the second channel, a second triggering frame sent by the access point. The second triggering frame is used to instruct the station to send the uplink data to the access point on the second channel within the first time. The first receive path is at least one of any z-1 receive paths of the z receive paths, and the second receive path is at least one of the z receive paths except the first receive path.

For example, in an example of a scenario shown in FIG. 5(c), a station STA 3 uses a first channel whose carrier frequency is f₀₁ to receive downlink data sent by the AP, and simultaneously, uses a second channel whose carrier frequency is f₀₂ to send uplink data to the AP. A transceiver of the AP includes m transmit paths and n receive paths. A transceiver of the station includes k transmit paths and z receive paths. First, the AP uses one to *n*-1 receive paths at a start time point (t₁) of the second time to perform CCA detection on the first channel, and uses at least one of remaining receive paths to perform CCA detection on the second channel. If both the first channel and the second channel are idle, the AP uses one to *m*-1 transmit paths at a start time point (t₂) of the third time to send a first triggering frame on the first channel, so as to send downlink transmission scheduling control information; and simultaneously, uses at least one of remaining transmit paths to send a second triggering frame on the second channel, so as to send uplink transmission scheduling control information. Then, the station uses the first receive path at t₂ to receive, on the first channel, the first triggering frame sent by the access point, the station uses the second receive path at t₂ to receive, on the second channel, the second triggering frame sent by the access point. After an SIFS, the AP may use, at a start time point (t₃) of the first time, all of the m transmit paths of the AP to send a downlink data frame on the first channel. The station performs receiving processing on the downlink data frame according to the scheduling control information downlink transmission sent by using the first triggering frame. For example, the station may use the z receive paths at the time point t₃ to receive, on the second channel, the uplink data sent by the access point. Simultaneously, the station sends, at the time point t₃, an uplink data frame to the AP on the second channel according to the uplink transmission scheduling control information sent by the second triggering frame. For example, the station uses the k transmit paths at the time point t₃ to send the downlink data to the access point on the first channel. The AP may use all of the n receive paths of the AP to receive the uplink data frame on the second channel.

Optionally, in another embodiment, the first triggering frame includes first scheduling control information. The first scheduling control information includes: an identifier of the station, a transmission resource used by the station to transmit data, a quantity of spatial flows, identifiers of the corresponding spatial flows, and modulation and coding scheme MCS information used for transmitting the corresponding spatial flows. The first scheduling control information is located in a MAC protocol data unit PDU in a high-efficiency signaling-B field HE-SIG-B or a data field at a physical layer of the triggering frame.

The second triggering frame includes second scheduling control information. The second scheduling control information includes: an identifier of the station, a transmission resource used by the station to transmit data, a quantity of spatial flows, identifiers of the corresponding spatial flows, and modulation and coding scheme MCS information used for transmitting the corresponding spatial flows. The second scheduling control information is located in a MAC protocol data unit PDU in a high-efficiency signaling-B field HE-SIG-B or a data field at a physical layer of the triggering frame.

In an example of implementing parallel uplink and downlink transmission in 802.11ax, a data frame and control frames such as a triggering frame and an ACK/BA frame in an 802.11ax physical layer packet all use a structure shown in FIG. 8. Each 802.11ax physical layer packet includes a preamble (Preamble) and a data field (Data Field). A media access control (Media Access Control, MAC) layer data unit to be transmitted by using the data field may be user data, MAC layer control signaling, or the like. The preamble includes two parts: a legacy preamble (Legacy Preamble) and an 802.11ax-specified preamble. The legacy preamble is a preamble involved in WLAN protocols such as 802.11a, 802.11n, 802.11ac, and 802.11ax, and the 802.11ax-specified preamble is used to transmit 802.11ax-specified physical layer control information and further includes fields such as a high-efficiency signaling-A field (High Efficiency Signal field, HE-SIG-A), a high-efficiency short training field (High Efficiency Short Training field, HE-STF), a high-efficiency long training field (High Efficiency Long Training field, HE-LTF), and a high-efficiency signaling-B field (High Efficiency Signal field, HE-SIG-B). The present invention involves the HE-SIG-B. The field is used to carry, including but not limited to, the following scheduling control information: identifiers of all STAs that are instructed to transmit data in the packet, transmission resources (for example, sub-carrier resources in a frequency domain) used by all the STAs to transmit the data, a quantity of spatial flows, identifiers of the corresponding spatial flows, and modulation and coding scheme (Modulation Coding Scheme, MCS) information used for transmitting the corresponding spatial flows.

It should be noted that because the downlink transmission scheduling control information has been sent by using the first triggering frame, preferably, a preamble of the downlink data frame in step 1210 no longer includes the field HE-SIG-B, as shown in FIG. 9. Simultaneously, the station sends, at the time point t₃, the uplink data frame to the AP on the second channel according to the uplink transmission scheduling control information transmitted by using the second triggering frame. The AP may use all of the n receive paths of the AP to receive the uplink data frame on the second channel. Similarly, a preamble of the uplink data frame no longer includes the field HE-SIG-B.

Specifically, as shown in FIG. 9, a preamble of a data frame of the uplink data includes a legacy preamble, a high-efficiency signaling-A field HE-SIG-A, a high-efficiency short training field HE-STF, and a high-efficiency long training field HE-LTF, and does not include the field HE-SIG-B. Similarly, a preamble of a data frame of the downlink data includes a legacy preamble, a high-efficiency signaling-A field HE-SIG-A, a high-efficiency short training field HE-STF, and a high-efficiency long training field HE-LTF, and does not include the field HE-SIG-B.

Further, in another embodiment, the preset time further includes a fourth time, and the fourth time is a time after an end time point of the first time.

In step 1330, the station uses at least one of the k transmit paths within the fourth time to send a first acknowledgement message to the access point on the first channel. The first acknowledgement message is used to indicate that the station has correctly received the downlink data.

In step 1340, the station uses at least one of the z receive paths within the fourth time to receive, on the second channel, a second acknowledgement message sent by the access point. The second acknowledgement message is used to indicate that the access point has correctly received the uplink data.

The first acknowledgement message may be an ACK frame or a BA frame, and the second acknowledgement message may be an ACK frame or a BA frame. For example, in an example of a scenario shown in FIG. 5(c), after step 1210 and step 1220, that is, within an SIFS time after transmission of the uplink and downlink data frames is completed, if the station has correctly received the downlink data frame sent by the AP, the station sends an uplink ACK/BA frame to the AP at a start time point (t₅) of the fourth time; and simultaneously, if the AP has correctly received the uplink data frame sent by the STA 2, the AP sends a downlink ACK/BA frame to the station at the time point t₅.

Further, in another embodiment, the preset time further includes a fifth time and a sixth time, the fifth time is a time after an end time point of the fourth time, and the sixth time is a time after an end time point of the fifth time.

The first triggering frame is further used to instruct the station to send third uplink data to the access point on the first channel within the fifth time.

The second triggering frame is further used to instruct the station to receive, on the second channel within the fifth time, fourth downlink data sent by the access point.

In step 1330, the station uses at least one of the k transmit paths within the fifth time to send the third uplink data to the access point on the first channel; the station uses at least one of the z receive paths within the sixth time to receive, on the first channel, a third acknowledgement message sent by the access point. The third acknowledgement message is used to indicate that the access point has correctly received the third uplink data.

In step 1340, the station uses at least one of the z receive paths within the fifth time to receive, on the second channel, the fourth downlink data sent by the access point; the station uses at least one of the k transmit paths within the sixth time to send a fourth acknowledgement message to the access point on the second channel. The fourth acknowledgement message is used to indicate that the station has correctly received the fourth downlink data.

Optionally, in another embodiment, the first channel is a channel with any contiguous or non-contiguous frequency spectra in frequency bands of 5490-5710 MHz and 5735-5835 MHz, and the second channel is a channel with any contiguous or non-contiguous frequency spectra in a frequency band of 5170-5330 MHz.

For example, FIG. 10 is a schematic diagram of using a 5 GHz unlicensed spectrum according to an embodiment of the present invention. A total bandwidth of a frequency spectrum that can be used in a WLAN is 480 MHz, 5490-5710 MHz and 5735-5835 MHz are used as a frequency band, and 5170-5330 MHz is used as another frequency band. Either the first channel or the second channel is a channel with any contiguous or non-contiguous frequency spectra of the two frequency bands. For example, the first channel and the second channel may be Ch1 and Ch2, Ch3 and Ch4, Ch5 and Ch6, or Ch7 and Ch8. In this way, there may be a guard band with a minimum bandwidth of 160 MHz between the two channels, so as to ensure isolation between a transmit path and a receive path.

Alternatively, in another embodiment, the first channel is a channel with any contiguous or non-contiguous frequency spectra in frequency bands of 5570-5710 MHz, 5735-5835 MHz, and 5850-5925 MHz, and the second channel is a channel with any contiguous or non-contiguous frequency spectra in frequency bands of 5170-5330 MHz and 5350-5430 MHz.

For example, FIG. 11 is a schematic diagram of using a 5 GHz unlicensed spectrum according to another embodiment of the present invention. A total bandwidth of a frequency spectrum that can be used in a WLAN is 675 MHz, and a middle section of frequency spectrum may be selected as a guard band. A channel in the guard band is not used for parallel uplink and downlink transmission, but uses the prior art. Channels in frequency bands on both sides of the guard band are used for parallel uplink and downlink transmission. For example, frequency spectra with a total of 315 MHz including 5570-5710 MHz, 5735-5835 MHz, and 5850-5925 MHz are used as a frequency band, and frequency spectra with a total of 240 MHz including 5170-5330 MHz and 5350-5430 MHz are used as another frequency band, where a frequency spectrum with a total of 140 MHz including 5430-5570 MHz is used as a guard band for parallel uplink and downlink transmission.

This embodiment of the present invention is described in more detail in the following with reference to specific examples in FIG. 14 to FIG. 17. It should be noted that the examples in this embodiment of the present invention are only to help a person skilled in the art to understand this embodiment of the present invention, instead of limiting this embodiment of the present invention to a specific value or specific scenario in the examples. For the examples provided in this embodiment, a person skilled in the art can obviously make various equivalent modifications and variations, and these modifications and variations also shall fall within the scope of this embodiment of the present invention.

FIG. 14 is a schematic diagram of a data transmission process according to an embodiment of the present invention. Scenarios of this embodiment are shown in FIG. 5(a) and FIG. 5(b). An AP instead of a STA implements parallel uplink and downlink transmission. In an example of a scenario shown in FIG. 5(a), a transceiver of an access point in the scenario includes m transmit paths and n receive paths. The AP uses a first channel whose carrier frequency is f₀₁ to send downlink data to a STA 1, and simultaneously, uses a second channel whose carrier frequency is f₀₂ to receive uplink data sent by a STA 2. As shown in FIG. 14, the AP uses one to *n*-1 receive paths at a time point t₁ to perform CCA detection on the first channel, and uses at least one of remaining receive paths to perform CCA detection on the second channel. If both the first channel and the second channel are idle, the AP reserves a TXOP for parallel uplink and downlink transmission. After an SIFS time, the AP uses one to *m*-1 transmit paths at a time point t₂ to send a first triggering frame on the first channel, so as to send downlink transmission scheduling control information; and simultaneously, uses at least one of remaining transmit paths to send a second triggering frame on the second channel, so as to send uplink transmission scheduling control information. The scheduling control information includes but is not limited to: identifiers of all STAs for instructing to transmit uplink or downlink data after a triggering frame, transmission resources (for example, subcarrier resources in a frequency domain) used by all the STAs to transmit the data, a quantity of spatial flows, identifiers of the corresponding spatial flows, modulation and coding scheme (Modulation Coding Scheme, MCS) information used for transmitting the corresponding spatial flows. The scheduling control information may be transmitted at a physical layer, for example, in HE-SIG-B, of the triggering frame, or may be transmitted at a MAC layer of the triggering frame, that is, transmitted by using a MAC data unit in a data field of the triggering frame.

After an SIFS time, the AP may use all of the m transmit paths of the AP at the time point t₃ to send the downlink data frame on the first channel. Because the downlink transmission scheduling control information has been sent by using the first triggering frame, preferably, a preamble of the downlink data frame no longer includes a field HE-SIG-B. As shown in FIG. 9, the STA 1 performs receiving processing on the downlink data frame according to the downlink transmission scheduling control information sent by using the first triggering frame. Simultaneously, the STA 2 sends, at the time point t₃, an uplink data frame to the AP on the second channel according to the uplink transmission scheduling control information sent by using the second triggering frame. The AP may use all of the n receive paths of the AP to receive the uplink data frame on the second channel. Similarly, a preamble of the uplink data frame no longer includes the field HE-SIG-B.

It should be noted that transmission times for triggering frames and data frames on the two channels are aligned, that is, both lengths of the triggering frames and the data frames that are transmitted on the two channels are the same. For the data frames, the AP may schedule uplink and downlink transmission of multiple STAs to select a proper STA and a proper data volume to perform transmission, ensuring that a length of an uplink data frame is the same as or close to that of a downlink data frame. For both the triggering frames and the data frames, a shorter frame may be padded (padding) at a MAC layer or a physical layer to ensure that lengths of uplink and downlink data frames are the same. For a padding method at the MAC layer or the physical layer, a method in an existing WLAN technology may be used, and no details are repeated.

Within an SIFS time after transmission of the uplink and downlink data frames ends, if the STA 1 has correctly received the downlink data frame sent by the AP, the STA 1 sends an uplink ACK/BA frame to the AP at a time point t₄, and simultaneously, if the AP has correctly received the uplink data frame sent by the STA 2, the AP sends a downlink ACK/BA frame to the STA 1 at the time point t₄. During ACK/BA frame transmission, the AP may use all of the m transmit paths of the AP to send the downlink ACK/BA frame on the second channel, and may use all of the n receive paths of the AP to receive the uplink ACK/BA frame on the first channel. Lengths of the uplink and downlink ACK/BA frames may be different. A TXOP reserved by the AP shall include a time from the time point t₂ of sending the triggering frame to a time point of completing transmission of a longer frame of the uplink and downlink ACK/BA frames.

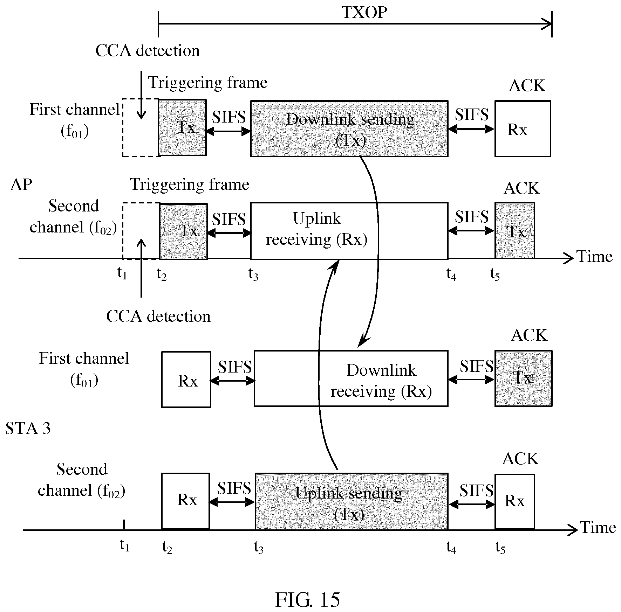

FIG. 15 is a schematic diagram of a data transmission process according to another embodiment of the present invention. In the another embodiment of the present invention, both the AP and the at least one STA implement parallel uplink and downlink transmission. Typical scenarios of this embodiment are shown in FIG. 5(c) and FIG. 5(d). In an example of a scenario shown in FIG. 5(c), both the AP and the STA 3 implement parallel uplink and downlink transmission, and the AP uses a first channel whose carrier frequency is f₀₁ to send downlink data to the STA 1, and simultaneously, uses a second channel whose carrier frequency is f₀₂ to receive uplink data sent by the STA 1. The data transmission process in this embodiment is still shown in FIG. 14. A difference between FIG. 15 and FIG. 14 lies in that all transmission processes of the STA 1 and the STA 2 in FIG. 14 are executed by the STA 3. To avoid repetition, no details are repeated.

FIG. 16 is a schematic diagram of a data transmission process according to another embodiment of the present invention. FIG. 16 shows a WLAN data transmission process based on an uplink and downlink cascading case of the present invention according to the present invention. In an example of a scenario shown in FIG. 5(a), an AP first uses a first channel whose carrier frequency is f₀₁ to send downlink data to a STA 1, and simultaneously, uses a second channel whose carrier frequency is f₀₂ to receive uplink data sent by a STA 2; and then uses the first channel to receive uplink data sent by the STA 1, and simultaneously, uses the second channel to send downlink data to the STA 2. Therefore, a TXOP reserved by the AP shall include a time from a time point t₂ of sending a triggering frame to a time point of completing transmission of a longer frame of uplink and downlink ACK/BA frames transmitted for the last time.

The process shown in FIG. 16 is basically the same as the process shown in FIG. 14 in terms of CCA detection, triggering frame sending, and uplink and downlink data frame transmission. A difference lies in that a triggering frame sent by the AP on the first channel carries only transmission scheduling control information for uplink transmission that starts to be performed by the STA 1 at a time point t₆, and a triggering frame sent by the AP on the second channel carries only transmission scheduling control information for uplink transmission that starts to be performed by the STA 2 at a time point t₃. In this way, only a preamble of an uplink data frame does not include a field HE-SIG-B, but both a preamble of a downlink data frame that starts to be sent to the STA 1 by the AP on the first channel at the time point t₃ and a preamble of a downlink data frame that starts to be sent to the STA 2 by the AP on the second channel at the time point t₆ still include fields HE-SIG-B. The field is used to carry scheduling control information for transmitting corresponding downlink data. In addition, uplink and downlink ACK/BA frame transmission in the process shown in FIG. 16 is different from that in the process shown in FIG. 14. That is, lengths of uplink and downlink ACK/BA frames transmitted for the last time may be different, and lengths of the remaining uplink and downlink AC/BA frames are the same. Similarly, this can be realized by padding a shorter ACK/BA frame at a MAC layer or a physical layer.

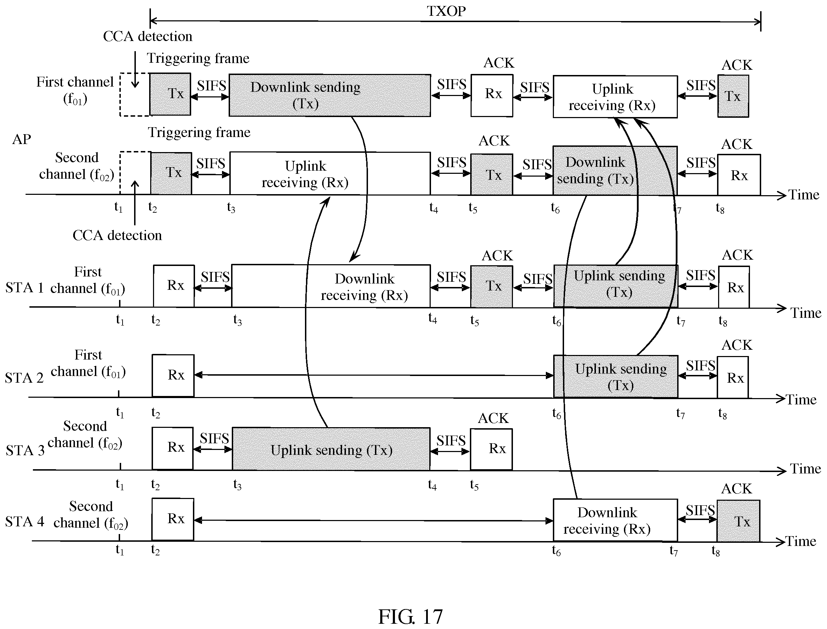

Although in FIG. 16, the scenario in FIG. 5(a) is used as an example, the process is applicable to various typical application scenarios shown in FIG. 5, including an application scenario in which only an AP supports parallel uplink and downlink transmission, or an application scenario in which both an AP and at least one STA support parallel uplink and downlink transmission, as shown in FIG. 17. FIG. 17 is a schematic diagram of a data transmission process according to another embodiment of the present invention. Operations of an AP in FIG. 17 are similar to those in FIG. 16. A difference lies in that in FIG. 17, the AP performs parallel uplink and downlink transmission with four STAs within one TXOP. That is, the AP first uses a first channel whose carrier frequency is f₀₁ to send downlink data to a STA 1, and simultaneously, uses a second channel whose carrier frequency is f₀₂ to receive uplink data sent by a STA 3; and then uses the first channel to receive uplink data sent by the STA 1 and a STA 2, and simultaneously, uses the second channel to send downlink data to a STA 4. The STA 1 and the STA 2 perform uplink multiplexing transmission by means of OFDMA and/or uplink MU-MIMO. In this case, in addition to scheduling control information, a triggering frame further includes timing information of an uplink data frame and/or a downlink data frame of each STA. Specifically, a triggering frame sent by the AP on the first channel further instructs the STA 2 to start uplink transmission at a time point t₆, and a triggering frame sent by the AP on the second channel further instructs the STA 4 to start downlink data receiving at the time point t₆.

It can be learned from the foregoing WLAN data transmission process of the present invention that, although uplink transmission and downlink transmission can be separately performed on any channel within different times, a WLAN device that supports parallel uplink and downlink transmission may correspondingly perform downlink and uplink transmission on another channel; and can always use all of m transmit paths to send data on one channel, and simultaneously use all of n receive paths to receive data on another channel, including uplink and downlink data frame transmission and uplink and downlink ACK/BA frame transmission. Therefore, without increasing complexity of a transmit path and a receive path including a path bandwidth and a path quantity, processing capacities of an existing transmit path and receive path can be fully used to obtain a maximum of twice a data throughput of a system.

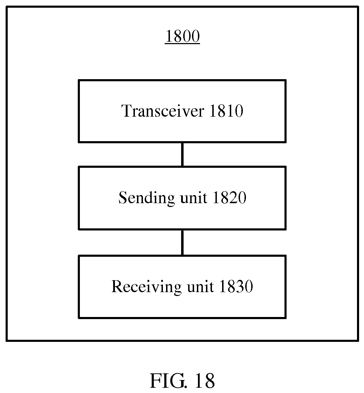

The data transmission methods of the embodiments of the present invention are described in detail in the foregoing with reference to FIG. 1 to FIG. 17. A data transmission device of embodiments of the present invention is described in detail in the following with reference to FIG. 18 to FIG. 27.

FIG. 18 is a schematic block diagram of an access point according to an embodiment of the present invention. The access point 1800 shown in FIG. 18 includes a transceiver 1810, a sending unit 1820, and a receiving unit 1830.

Specifically, the transceiver 1810 includes m transmit paths and n receive paths.

The sending unit 1820 is configured to use at least one of the m transmit paths within a first time to send downlink data to at least one first station on a first channel.

The receiving unit 1830 is configured to use at least one of the n receive paths within the first time to receive, on a second channel, uplink data sent by at least one second station. A start time point and an end time point at which the sending unit 1820 sends the downlink data are respectively the same as those at which the receiving unit 1830 receives the uplink data.

Therefore, in this embodiment of the present invention, uplink transmission and downlink transmission can be performed simultaneously on different channels, so that a transmit path and a receive path work simultaneously. This can fully use processing capabilities of an existing transmit path and receive path, increasing a throughput of a system.

Optionally, in another embodiment, the sending unit 1820 uses the m transmit paths within the first time to send the downlink data to the at least one first station on the first channel; the receiving unit 1830 uses the n receive paths within the first time to receive, on the second channel, the uplink data sent by the at least one second station.

Therefore, in this embodiment of the present invention, processing capabilities of an existing transmit path and receive path can be fully used to effectively increase a throughput of a system. Particularly, when *m* = *n*, a maximum throughput of the system can be up to twice that of an existing WLAN system.

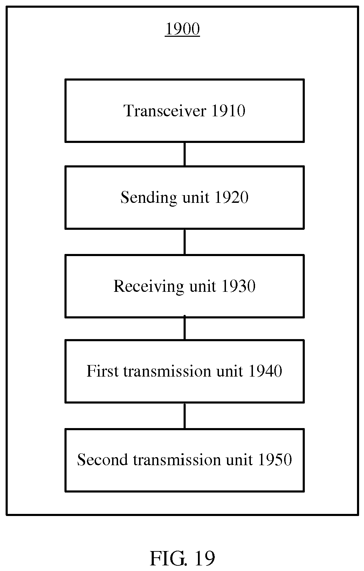

Optionally, in another embodiment, the access point further includes a first transmission unit and a second transmission unit. Correspondingly, an access point shown in FIG. 19 includes a transceiver 1910, a sending unit 1920, a receiving unit 1930, a first transmission unit 1940, and a second transmission unit 1950.

Specifically, the transceiver 1910, the sending unit 1920, and the receiving unit 1930 are respectively corresponding to the transceiver 1810, the sending unit 1820, and the receiving unit 1830 that are shown in FIG. 18. To avoid repetition, no details are repeated herein.

The first transmission unit 1940 is configured to perform uplink or downlink transmission on the first channel within a preset time.

The second transmission unit 1950 is configured to perform uplink or downlink transmission on the second channel within the preset time.

The preset time is a time other than the first time, and when the first transmission unit performs uplink transmission on the first channel within the preset time, the second transmission unit performs downlink transmission on the second channel within the preset time, or when the first transmission unit performs downlink transmission on the first channel within the preset time, the second transmission unit performs uplink transmission on the second channel within the preset time.

Optionally, in another embodiment, the preset time includes a second time, and the second time is a time before a start time point of the first time. The first transmission unit 1940 uses a first receive path within the second time to: perform clear channel assessment CCA detection on the first channel, and determine that the first channel is idle; the second transmission unit 1950 uses a second receive path within the second time to: perform CCA detection on the second channel, and determine that the second channel is idle. The first receive path is at least one of any n-1 receive paths of the n receive paths, and the second receive path is at least one of the n receive paths except the first receive path.

Optionally, in another embodiment, the preset time further includes a third time, and the third time is a time that is before the start time point of the first time and that is after an end time point of the second time. The first transmission unit 1940 is further configured to use a first transmit path within the third time to send a first triggering frame to the at least one first station on the first channel. The first triggering frame is used to instruct the at least one first station to receive, on the first channel within the first time, the downlink data sent by the access point.

The second transmission unit 1950 is further configured to use a second transmit path within the third time to send a second triggering frame to the at least one second station on the second channel. The second triggering frame is used to instruct the at least one second station to send the uplink data to the access point on the second channel within the first time, the first transmit path is at least one of any m-1 transmit paths of the m transmit paths, and the second transmit path is at least one of the m transmit paths except the first transmit path.

Optionally, in another embodiment, the first triggering frame includes first scheduling control information. The first scheduling control information includes: an identifier of each station of the at least one first station, a transmission resource used by the at least one first station to transmit data, a quantity of spatial flows, identifiers of the corresponding spatial flows, and modulation and coding scheme MCS information used for transmitting the corresponding spatial flows. The first scheduling control information is located in a MAC protocol data unit PDU in a high-efficiency signaling-B field HE-SIG-B or a data field at a physical layer of the first triggering frame.

The second triggering frame includes second scheduling control information. The second scheduling control information includes: an identifier of each station of the at least one second station, a transmission resource used by the at least one second station to transmit data, a quantity of spatial flows, identifiers of the corresponding spatial flows, and modulation and coding scheme MCS information used for transmitting the corresponding spatial flows. The second scheduling control information is located in a MAC protocol data unit PDU in a high-efficiency signaling-B field HE-SIG-B or a data field at a physical layer of the second triggering frame.

Optionally, in another embodiment, the preset time further includes a fourth time, and the fourth time is a time after an end time point of the first time. The first transmission unit 1940 is further configured to use at least one of the n receive paths within the fourth time to receive, on the first channel, a first acknowledgement message sent by the at least one first station. The first acknowledgement message is used to indicate that the at least one first station has correctly received the downlink data. The second transmission unit 1950 is further configured to use at least one of the m transmit paths within the fourth time to send a second acknowledgement message to the at least one second station on the second channel. The second acknowledgement message is used to indicate that the access point has correctly received the uplink data.

Optionally, in another embodiment, the preset time further includes a fifth time and a sixth time, the fifth time is a time after an end time point of the fourth time, and the sixth time is a time after an end time point of the fifth time. The first triggering frame is further used to instruct at least one third station to send third uplink data to the access point on the first channel within the fifth time. The second triggering frame is further used to instruct at least one fourth station to receive, on the second channel within the fifth time, fourth downlink data sent by the access point. The first transmission unit 1940 is further configured to: use at least one of the n receive paths within the fifth time to receive, on the first channel, the third uplink data sent by the at least one third station; and use at least one of the m transmit paths within the sixth time to send a third acknowledgement message to the at least one third station on the first channel, where the third acknowledgement message is used to indicate that the access point has correctly received the third uplink data. The second transmission unit 1950 is further configured to: use at least one of the m transmit paths within the fifth time to send the fourth downlink data to the at least one fourth station on the second channel; and use at least one of the n receive paths within the sixth time to receive, on the second channel, a fourth acknowledgement message sent by the at least one fourth station. The fourth acknowledgement message is used to indicate that the at least one fourth station has correctly received the fourth downlink data.

Optionally, in another embodiment, a preamble of a data frame of the uplink data includes a legacy preamble, a high-efficiency signaling-A field HE-SIG-A, a high-efficiency short training field HE-STF, and a high-efficiency long training field HE-LTF, and does not include a high-efficiency signaling-B field HE-SIG-B; a preamble of a data frame of the downlink data includes a legacy preamble, a high-efficiency signaling-A field HE-SIG-A, a high-efficiency short training field HE-STF, and a high-efficiency long training field HE-LTF, and does not include a high-efficiency signaling-B field HE-SIG-B.

Optionally, in another embodiment, the first channel is a channel with any contiguous or non-contiguous frequency spectra in frequency bands of 5490-5710 MHz and 5735-5835 MHz, and the second channel is a channel with any contiguous or non-contiguous frequency spectra in a frequency band of 5170-5330 MHz.

Optionally, in another embodiment, the first channel is a channel with any contiguous or non-contiguous frequency spectra in frequency bands of 5570-5710 MHz, 5735-5835 MHz, and 5850-5925 MHz, and the second channel is a channel with any contiguous or non-contiguous frequency spectra in frequency bands of 5170-5330 MHz and 5350-5430 MHz.

It should be noted that the access points shown in FIG. 18 and FIG. 19 can implement all processes completed by the access points in the method embodiments in FIG. 1 to FIG. 17. For other functions and operations of the access point 1800 and the access point 1900, refer to all processes involving the access points in the method embodiments in FIG. 1 to FIG. 17. To avoid repetition, no details are repeated herein.

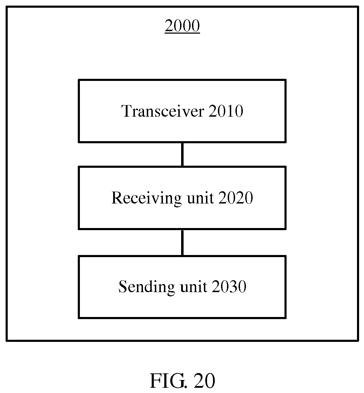

FIG. 20 is a schematic block diagram of a station according to an embodiment of the present invention. The station 2000 shown in FIG. 20 includes a transceiver 2010, a sending unit 2030, and a receiving unit 2020.

Specifically, the transceiver 2010 includes k transmit paths and z receive paths.

The receiving unit 2020 is configured to use at least one of the z receive paths within a first time to receive, on a first channel, downlink data sent by an access point.

The sending unit 2030 is configured to use at least one of the K transmit paths within the first time to send uplink data to the access point on a second channel. A start time point and an end time point at which the receiving unit 2020 receives the downlink data are respectively the same as those at which the sending unit 2030 sends the uplink data.

Therefore, in this embodiment of the present invention, uplink transmission and downlink transmission can be performed simultaneously on different channels, so that a transmit path and a receive path work simultaneously. This can fully use processing capabilities of an existing transmit path and receive path, increasing a throughput of a system.

Optionally, in another embodiment, the sending unit 2020 uses the z receive paths within the first time to receive, on the first channel, the downlink data sent by the access point. The receiving unit 2020 uses the k transmit paths within the first time to send the uplink data to the access point on the second channel.

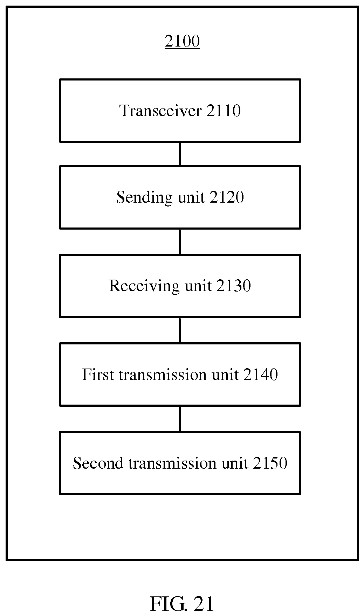

Optionally, in another embodiment, the station further includes a first transmission unit and a second transmission unit. Correspondingly, a station shown in FIG. 21 includes a transceiver 2110, a sending unit 2120, a receiving unit 2130, a first transmission unit 2140, and a second transmission unit 2150.

Specifically, the transceiver 2110, the sending unit 2120, and the receiving unit 2130 are respectively corresponding to the transceiver 2010, the sending unit 2030, and the receiving unit 2020 that are shown in FIG. 20. To avoid repetition, no details are repeated herein.

The first transmission unit 2140 is configured to perform uplink or downlink transmission on the first channel within a preset time. The second transmission unit 2150 is configured to perform uplink or downlink transmission on the second channel within the preset time. The preset time is a time other than the first time, and when the first transmission unit performs uplink transmission on the first channel within the preset time, the second transmission unit performs downlink transmission on the second channel within the preset time, or when the first transmission unit performs downlink transmission on the first channel within the preset time, the second transmission unit performs uplink transmission on the second channel within the preset time.

Optionally, in another embodiment, the preset time includes a third time, and the third time is a time before a start time point of the first time.

The first transmission unit 2140 uses a first receive path within the third time to receive, on the first channel, a first triggering frame sent by the access point. The first triggering frame is used to instruct the station to receive, on the first channel within the first time, the downlink data sent by the access point.

The second transmission unit 2150 uses a second receive path within the third time to receive, on the second channel, a second triggering frame sent by the access point. The second triggering frame is used to instruct the station to send the uplink data to the access point on the second channel within the first time.

The first receive path is at least one of any z-1 receive paths of the z receive paths, and the second receive path is at least one of the z receive paths except the first receive path.

Optionally, in another embodiment, the first triggering frame includes first scheduling control information. The first scheduling control information includes: an identifier of the station, a transmission resource used by the station to transmit data, a quantity of spatial flows, identifiers of the corresponding spatial flows, and modulation and coding scheme MCS information used for transmitting the corresponding spatial flows. The first scheduling control information is located in a MAC protocol data unit PDU in a high-efficiency signaling-B field HE-SIG-B or a data field at a physical layer of the triggering frame.

The second triggering frame includes second scheduling control information. The second scheduling control information includes: an identifier of the station, a transmission resource used by the station to transmit data, a quantity of spatial flows, identifiers of the corresponding spatial flows, and modulation and coding scheme MCS information used for transmitting the corresponding spatial flows. The second scheduling control information is located in a MAC protocol data unit PDU in a high-efficiency signaling-B field HE-SIG-B or a data field at a physical layer of the triggering frame.

Optionally, in another embodiment, the preset time further includes a fourth time, and the fourth time is a time after an end time point of the first time.

The first transmission unit 2140 is further configured to use at least one of the k transmit paths within the fourth time to send a first acknowledgement message to the access point on the first channel. The first acknowledgement message is used to indicate that the station has correctly received the downlink data.

The second transmission unit 2150 is further configured to use at least one of the z receive paths within the fourth time to receive, on the second channel, a second acknowledgement message sent by the access point. The second acknowledgement message is used to indicate that the access point has correctly received the uplink data.

Optionally, in another embodiment, the preset time further includes a fifth time and a sixth time, the fifth time is a time after an end time point of the fourth time, and the sixth time is a time after an end time point of the fifth time.

The first triggering frame is further used to instruct the station to send third uplink data to the access point on the first channel within the fifth time.

The second triggering frame is further used to instruct the station to receive, on the second channel within the fifth time, fourth downlink data sent by the access point.

The first transmission unit 2140 is further configured to: use at least one of the k transmit paths within the fifth time to send the third uplink data to the access point on the first channel; and use at least one of the z receive paths within the sixth time to receive, on the first channel, a third acknowledgement message sent by the access point. The third acknowledgement message is used to indicate that the access point has correctly received the third uplink data.

The second transmission unit 2150 is further configured to: use at least one of the z receive paths within the fifth time to receive, on the second channel, the fourth downlink data sent by the access point; and use at least one of the k transmit paths within the sixth time to send a fourth acknowledgement message to the access point on the second channel. The fourth acknowledgement message is used to indicate that the station has correctly received the fourth downlink data.

Optionally, in another embodiment, a preamble of a data frame of the uplink data includes a legacy preamble, a high-efficiency signaling-A field HE-SIG-A, a high-efficiency short training field HE-STF, and a high-efficiency long training field HE-LTF, and does not include a high-efficiency signaling-B field HE-SIG-B.

A preamble of a data frame of the downlink data includes a legacy preamble, a high-efficiency signaling-A field HE-SIG-A, a high-efficiency short training field HE-STF, and a high-efficiency long training field HE-LTF, and does not include a high-efficiency signaling-B field HE-SIG-B.

Optionally, in another embodiment, the first channel is a channel with any contiguous or non-contiguous frequency spectra in frequency bands of 5490-5710 MHz and 5735-5835 MHz, and the second channel is a channel with any contiguous or non-contiguous frequency spectra in a frequency band of 5170-5330 MHz.

Optionally, in another embodiment, the first channel is a channel with any contiguous or non-contiguous frequency spectra in frequency bands of 5570-5710 MHz, 5735-5835 MHz, and 5850-5925 MHz, and the second channel is a channel with any contiguous or non-contiguous frequency spectra in frequency bands of 5170-5330 MHz and 5350-5430 MHz.

It should be noted that the stations shown in FIG. 20 and FIG. 21 can implement all processes completed by the stations in the method embodiments in FIG. 1 to FIG. 17. For other functions and operations of the station 2000 and the station 2100, refer to all processes involving the stations in the method embodiments in FIG. 1 to FIG. 17. To avoid repetition, no details are repeated herein.

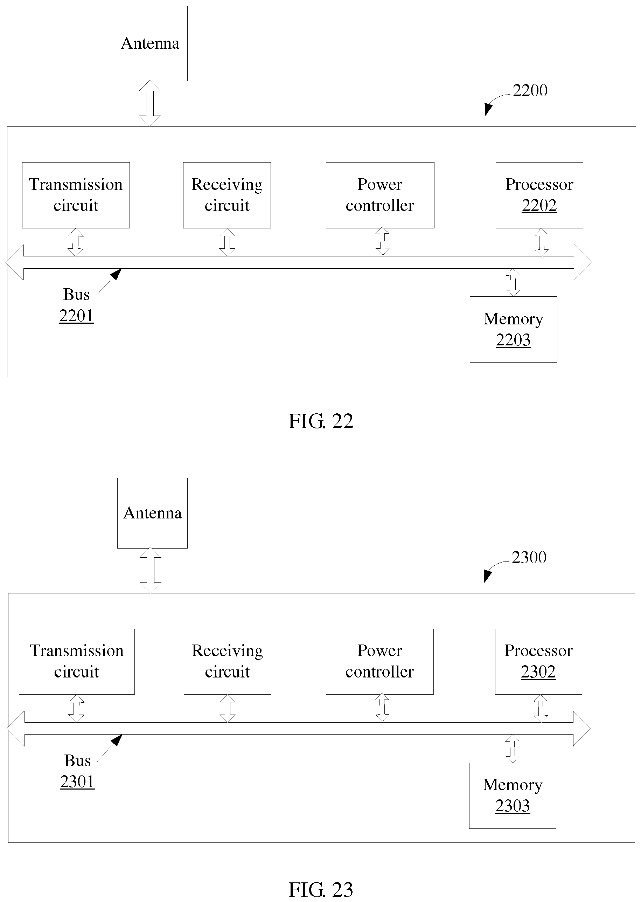

FIG. 22 is a schematic block diagram of an access point according to another embodiment of the present invention. The access point 2200 shown in FIG. 22 includes:
a bus 2201;
a processor 2202 connected to the bus; and
a memory 2203 connected to the bus.

The processor calls, by using the bus, a program stored in the memory, and is configured to: use at least one of m transmit paths within a first time to send downlink data to at least one first station on a first channel within a first time, and use at least one of n receive paths within the first time to receive, on a second channel, uplink data sent by at least one second station. A start time point and an end time point of sending the downlink data are respectively the same as those of receiving the uplink data.

Therefore, in this embodiment of the present invention, uplink transmission and downlink transmission can be performed simultaneously on different channels, so that a transmit path and a receive path work simultaneously. This can fully use processing capabilities of an existing transmit path and receive path, increasing a throughput of a system.

It should be understood that a transceiver of the apparatus 2200 may include a receiving circuit, a transmission circuit, a power controller, and an antenna, and the transceiver includes m transmit paths and n receive paths.

The processor may also be referred to as a CPU. The memory may include a read-only memory and a random access memory and provide an instruction and data for the processor. A part of the memory may further include a non-volatile random access memory (NVRAM). In a specific application, the apparatus 2200 may be embedded into or may be a wireless communications device such as a mobile telephone, or a network device such as a network-side device, and may further include a carrier that holds the transmission circuit and the receiving circuit, so as to allow data transmission and receiving between the apparatus 2200 and a remote location. The transmission circuit and the receiving circuit can be coupled to the antenna. All components of the apparatus 2200 are coupled together by using the bus. In addition to a data bus, the bus further includes a power bus, a control bus, and a status signal bus. However, for clear description, all types of buses in the figure are marked as the bus 2201. Specifically, components that are in different products and that implement all functions may be integrated with a processing unit.

The processor can implement or execute the steps and logic block diagrams disclosed in the embodiments of the present invention. A general purpose processor may be a microprocessor, or the processor may be any conventional processor. The steps of the methods disclosed with reference to the embodiments of the present invention may be executed and completed by a hardware processor, or may be executed and completed by using a combination of hardware and software modules in the processor. The software module may be located in a storage medium mature in the art such as a random access memory, a flash memory, a read-only memory, a programmable read-only memory, an electrically erasable programmable memory, or a register.

It should be understood that in this embodiment of the present invention, the processor 2202 may be a central processing unit (Central Processing Unit, "CPU" for short), and the processor 2202 may further be another general purpose processor, a digital signal processor (DSP), an application-specific integrated circuit (ASIC), a field programmable gate array (FPGA) or another programmable logic device, a discrete gate or transistor logic device, a discrete hardware component, or the like. The general purpose processor may be a microprocessor, or the processor may be any conventional processor or the like.

The memory 2203 may include a read-only memory and a random access memory and provide an instruction and data for the processor 2202. A part of the memory 2203 may further include a non-volatile random access memory. For example, the memory 2203 may further store information about a device type.

In addition to a data bus, the bus system may further include a power bus, a control bus, a status signal bus, or the like. However, for clear description, all types of buses are marked as the bus system in the figure.

In an implementation process, all steps of the foregoing methods may be completed by using an integrated logic circuit of hardware of the processor 2202 or by using an instruction in a software form. The steps of the methods disclosed with reference to the embodiments of the present invention may be executed and completed by a hardware processor, or may be executed and completed by using a combination of hardware and software modules in the processor. The software module may be located in a storage medium mature in the art such as a random access memory, a flash memory, a read-only memory, a programmable read-only memory, an electrically erasable programmable memory, or a register. The storage medium is located in the memory 2203. The processor 2202 reads information from the memory 2203, and completes the steps of the foregoing methods with reference to the hardware of the processor 2202. To avoid repetition, no details are repeated herein.

Optionally, in another embodiment, the processor 2202 is configured to: use the m transmit paths within the first time to send the downlink data to the at least one first station on the first channel; and use the n receive paths within the first time to receive, on the second channel, the uplink data sent by the at least one second station.

Optionally, in another embodiment, the processor 2202 is further configured to: perform uplink or downlink transmission on the first channel within a preset time; and perform uplink or downlink transmission on the second channel within the preset time. The preset time is a time other than the first time, and when the first transmission unit performs uplink transmission on the first channel within the preset time, the second transmission unit performs downlink transmission on the second channel within the preset time, or when the first transmission unit performs downlink transmission on the first channel within the preset time, the second transmission unit performs uplink transmission on the second channel within the preset time.

Optionally, in another embodiment, the preset time includes a second time, and the second time is a time before a start time point of the first time. The processor 2202 is further configured to: use a first receive path within the second time to: perform clear channel assessment CCA detection on the first channel, and determine that the first channel is idle; and use a second receive path within the second time to: perform CCA detection on the second channel, and determine that the second channel is idle. The first receive path is at least one of any n-1 receive paths of the n receive paths, and the second receive path is at least one of the n receive paths except the first receive path.

Optionally, in another embodiment, the preset time further includes a third time, and the third time is a time that is before the start time point of the first time and that is after an end time point of the second time. The processor 2202 is further configured to: use a first transmit path within the third time to send a first triggering frame to the at least one first station on the first channel, where the first triggering frame is used to instruct the at least one first station to receive, on the first channel within the first time, the downlink data sent by the access point; and use a second transmit path within the third time to send a second triggering frame to the at least one second station on the second channel, where the second triggering frame is used to instruct the at least one second station to send the uplink data to the access point on the second channel within the first time. The first transmit path is at least one of any m-1 transmit paths of the m transmit paths, and the second transmit path is at least one of the m transmit paths except the first transmit path.

Optionally, in another embodiment, the first triggering frame includes first scheduling control information. The first scheduling control information includes: an identifier of each station of the at least one first station, a transmission resource used by the at least one first station to transmit data, a quantity of spatial flows, identifiers of the corresponding spatial flows, and modulation and coding scheme MCS information used for transmitting the corresponding spatial flows. The first scheduling control information is located in a MAC protocol data unit PDU in a high-efficiency signaling-B field HE-SIG-B or a data field at a physical layer of the first triggering frame. The second triggering frame includes second scheduling control information. The second scheduling control information includes: an identifier of each station of the at least one second station, a transmission resource used by the at least one second station to transmit data, a quantity of spatial flows, identifiers of the corresponding spatial flows, and modulation and coding scheme MCS information used for transmitting the corresponding spatial flows. The second scheduling control information is located in a MAC protocol data unit PDU in a high-efficiency signaling-B field HE-SIG-B or a data field at a physical layer of the second triggering frame.

Optionally, in another embodiment, the preset time further includes a fourth time, and the fourth time is a time after an end time point of the first time. The processor 2202 is further configured to: use at least one of the n receive paths within the fourth time to receive, on the first channel, a first acknowledgement message sent by the at least one first station, where the first acknowledgement message is used to indicate that the at least one first station has correctly received the downlink data; and use at least one of the m transmit paths within the fourth time to send a second acknowledgement message to the at least one second station on the second channel. The second acknowledgement message is used to indicate that the access point has correctly received the uplink data.

Optionally, in another embodiment, the preset time further includes a fifth time and a sixth time, the fifth time is a time after an end time point of the fourth time, and the sixth time is a time after an end time point of the fifth time. The first triggering frame is further used to instruct at least one third station to send third uplink data to the access point on the first channel within the fifth time. The second triggering frame is further used to instruct at least one fourth station to receive, on the second channel within the fifth time, fourth downlink data sent by the access point. The processor 2202 is further configured to: use at least one of the n receive paths within the fifth time to receive, on the first channel, the third uplink data sent by the at least one third station; use at least one of the m transmit paths within the sixth time to send a third acknowledgement message to the at least one third station on the first channel, where the third acknowledgement message is used to indicate that the access point has correctly received the third uplink data; use at least one of the m transmit paths within the fifth time to send the fourth downlink data to the at least one fourth station on the second channel; and use at least one of the n receive paths within the sixth time to receive, on the second channel, a fourth acknowledgement message sent by the at least one fourth station, where the fourth acknowledgement message is used to indicate that the at least one fourth station has correctly received the fourth downlink data.

Optionally, in another embodiment, a preamble of a data frame of the uplink data includes a legacy preamble, a high-efficiency signaling-A field HE-SIG-A, a high-efficiency short training field HE-STF, and a high-efficiency long training field HE-LTF, and does not include a high-efficiency signaling-B field HE-SIG-B; a preamble of a data frame of the downlink data includes a legacy preamble, a high-efficiency signaling-A field HE-SIG-A, a high-efficiency short training field HE-STF, and a high-efficiency long training field HE-LTF, and does not include a high-efficiency signaling-B field HE-SIG-B.

Optionally, in another embodiment, the first channel is a channel with any contiguous or non-contiguous frequency spectra in frequency bands of 5490-5710 MHz and 5735-5835 MHz, and the second channel is a channel with any contiguous or non-contiguous frequency spectra in a frequency band of 5170-5330 MHz.

Optionally, in another embodiment, the first channel is a channel with any contiguous or non-contiguous frequency spectra in frequency bands of 5570-5710 MHz, 5735-5835 MHz, and 5850-5925 MHz, and the second channel is a channel with any contiguous or non-contiguous frequency spectra in frequency bands of 5170-5330 MHz and 5350-5430 MHz.

It should be noted that the access point in FIG. 22 is corresponding to the access points shown in FIG. 18 and FIG. 19 and can implement all processes completed by the access points in the method embodiments in FIG. 1 to FIG. 17. For other functions and operations of the access point 2200, refer to all processes involving the access points in the method embodiments in FIG. 1 to FIG. 17. To avoid repetition, no details are repeated herein.

FIG. 23 is a schematic block diagram of a station according to another embodiment of the present invention. The station 2300 shown in FIG. 23 includes:
a bus 2301;
a processor 2302 connected to the bus; and
a memory 2303 connected to the bus.

The processor calls, by using the bus, a program stored in the memory and is configured to: use at least one of z receive paths within a first time to receive, on a first channel, downlink data sent by an access point; and use at least one of K transmit paths within the first time to send uplink data to the access point on a second channel. A start time point and an end time point of receiving the downlink data are respectively the same as those of sending the uplink data.

Therefore, in this embodiment of the present invention, uplink transmission and downlink transmission can be performed simultaneously on different channels, so that a transmit path and a receive path work simultaneously. This can fully use processing capabilities of an existing transmit path and receive path, increasing a throughput of a system.

It should be understood that a transceiver of the apparatus 2300 may include a receiving circuit, a transmission circuit, a power controller, and an antenna, and the transceiver includes k transmit paths and z receive paths.

The processor may also be referred to as a CPU. The memory may include a read-only memory and a random access memory and provide an instruction and data for the processor. A part of the memory may further include a non-volatile random access memory (NVRAM). In a specific application, the apparatus 2300 may be embedded into or may be a wireless communications device such as a mobile telephone, or a network device such as a network-side device, and may further include a carrier that holds the transmission circuit and the receiving circuit, so as to allow data transmission and receiving between the apparatus 2300 and a remote location. The transmission circuit and the receiving circuit can be coupled to the antenna. All components of the apparatus 2300 are coupled together by using the bus. In addition to a data bus, the bus further includes a power bus, a control bus, and a status signal bus. However, for clear description, all types of buses in the figure are marked as the bus 2301. Specifically, components that are in different products and that implement all functions may be integrated with a processing unit.

The processor can implement or execute the steps and logic block diagrams disclosed in the embodiments of the present invention. A general purpose processor may be a microprocessor, or the processor may be any conventional processor. The steps of the methods disclosed with reference to the embodiments of the present invention may be executed and completed by a hardware processor, or may be executed and completed by using a combination of hardware and software modules in the processor. The software module may be located in a storage medium mature in the art such as a random access memory, a flash memory, a read-only memory, a programmable read-only memory, an electrically erasable programmable memory, or a register.

It should be understood that in this embodiment of the present invention, the processor 2302 may be a central processing unit (Central Processing Unit, "CPU" for short), and the processor 2302 may further be another general purpose processor, a digital signal processor (DSP), an application-specific integrated circuit (ASIC), a field programmable gate array (FPGA) or another programmable logic device, a discrete gate or transistor logic device, a discrete hardware component, or the like. The general purpose processor may be a microprocessor, or the processor may be any conventional processor or the like.

The memory 2303 may include a read-only memory and a random access memory and provide an instruction and data for the processor 2302. A part of the memory 2303 may further include a non-volatile random access memory. For example, the memory 2303 may further store information about a device type.

In addition to a data bus, the bus system may further include a power bus, a control bus, a status signal bus, or the like. However, for clear description, all types of buses are marked as the bus system in the figure.

In an implementation process, all steps of the foregoing methods may be completed by using an integrated logic circuit of hardware of the processor 2302 or by using an instruction in a software form. The steps of the methods disclosed with reference to the embodiments of the present invention may be executed and completed by a hardware processor, or may be executed and completed by using a combination of hardware and software modules in the processor. The software module may be located in a storage medium mature in the art such as a random access memory, a flash memory, a read-only memory, a programmable read-only memory, an electrically erasable programmable memory, or a register. The storage medium is located in the memory 2303. The processor 2302 reads information from the memory 2303, and completes the steps of the foregoing methods with reference to the hardware of the processor 2302. To avoid repetition, no details are repeated herein.

Optionally, in another embodiment, the processor 2302 uses the z receive paths within the first time to receive, on the first channel, the downlink data sent by the access point; and uses the k transmit paths within the first time to send the uplink data to the access point on the second channel.

Optionally, in another embodiment, the processor 2302 is further configured to: perform uplink or downlink transmission on the first channel within a preset time; and perform uplink or downlink transmission on the second channel within the preset time. The preset time is a time other than the first time, and when the first transmission unit performs uplink transmission on the first channel within the preset time, the second transmission unit performs downlink transmission on the second channel within the preset time, or when the first transmission unit performs downlink transmission on the first channel within the preset time, the second transmission unit performs uplink transmission on the second channel within the preset time.

Optionally, in another embodiment, the preset time includes a third time, and the third time is a time before a start time point of the first time. The processor 2302 is further configured to: use a first receive path within the third time to receive, on the first channel, a first triggering frame sent by the access point, where the first triggering frame is used to instruct the station to receive, on the first channel within the first time, the downlink data sent by the access point; and use a second receive path within the third time to receive, on the second channel, a second triggering frame sent by the access point, where the second triggering frame is used to instruct the station to send the uplink data to the access point on the second channel within the first time. The first receive path is at least one of any z-1 receive paths of the z receive paths, and the second receive path is at least one of the z receive paths except the first receive path.

Optionally, in another embodiment, the first triggering frame includes first scheduling control information. The first scheduling control information includes: an identifier of the station, a transmission resource used by the station to transmit data, a quantity of spatial flows, identifiers of the corresponding spatial flows, and modulation and coding scheme MCS information used for transmitting the corresponding spatial flows. The first scheduling control information is located in a MAC protocol data unit PDU in a high-efficiency signaling-B field HE-SIG-B or a data field at a physical layer of the triggering frame. The second triggering frame includes second scheduling control information. The second scheduling control information includes: an identifier of the station, a transmission resource used by the station to transmit data, a quantity of spatial flows, identifiers of the corresponding spatial flows, and modulation and coding scheme MCS information used for transmitting the corresponding spatial flows. The second scheduling control information is located in a MAC protocol data unit PDU in a high-efficiency signaling-B field HE-SIG-B or a data field at a physical layer of the triggering frame.

Optionally, in another embodiment, the preset time further includes a fourth time, and the fourth time is a time after an end time point of the first time. The processor 2302 is further configured to: use at least one of the k transmit paths within the fourth time to send a first acknowledgement message to the access point on the first channel, where the first acknowledgement message is used to indicate that the station has correctly received the downlink data; and use at least one of the z receive paths within the fourth time to receive, on the second channel, a second acknowledgement message sent by the access point. The second acknowledgement message is used to indicate that the access point has correctly received the uplink data.

Optionally, in another embodiment, the preset time further includes a fifth time and a sixth time, the fifth time is a time after an end time point of the fourth time, and the sixth time is a time after an end time point of the fifth time. The first triggering frame is further used to instruct the station to send third uplink data to the access point on the first channel within the fifth time. The second triggering frame is further used to instruct the station to receive, on the second channel within the fifth time, fourth downlink data sent by the access point. The processor 2302 is further configured to: use at least one of the k transmit paths within the fifth time to send the third uplink data to the access point on the first channel; and use at least one of the z receive paths within the sixth time to receive, on the first channel, a third acknowledgement message sent by the access point, where the third acknowledgement message is used to indicate that the access point has correctly received the third uplink data; use at least one of the z receive paths within the fifth time to receive, on the second channel, the fourth downlink data sent by the access point; and use at least one of the k transmit paths within the sixth time to send a fourth acknowledgement message to the access point on the second channel. The fourth acknowledgement message is used to indicate that the station has correctly received the fourth downlink data.

Optionally, in another embodiment, a preamble of a data frame of the uplink data includes a legacy preamble, a high-efficiency signaling-A field HE-SIG-A, a high-efficiency short training field HE-STF, and a high-efficiency long training field HE-LTF, and does not include a high-efficiency signaling-B field HE-SIG-B; a preamble of a data frame of the downlink data includes a legacy preamble, a high-efficiency signaling-A field HE-SIG-A, a high-efficiency short training field HE-STF, and a high-efficiency long training field HE-LTF, and does not include a high-efficiency signaling-B field HE-SIG-B.

Optionally, in another embodiment, the first channel is a channel with any contiguous or non-contiguous frequency spectra in frequency bands of 5490-5710 MHz and 5735-5835 MHz, and the second channel is a channel with any contiguous or non-contiguous frequency spectra in a frequency band of 5170-5330 MHz.

Optionally, in another embodiment, the first channel is a channel with any contiguous or non-contiguous frequency spectra in frequency bands of 5570-5710 MHz, 5735-5835 MHz, and 5850-5925 MHz, and the second channel is a channel with any contiguous or non-contiguous frequency spectra in frequency bands of 5170-5330 MHz and 5350-5430 MHz.

It should be noted that the station shown in FIG. 23 is corresponding to the stations shown in FIG. 20 and FIG. 21 and can implement all processes completed by the stations in the method embodiments in FIG. 1 to FIG. 17. For other functions and operations of the station 2300, refer to all processes involving the stations in the method embodiments in FIG. 1 to FIG. 17. To avoid repetition, no details are repeated herein.

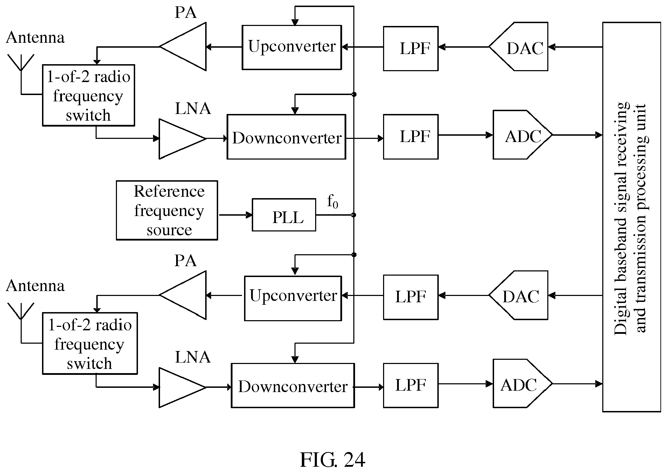

In addition, an embodiment of the present invention puts forward a transceiver corresponding to the foregoing data transmission method. To implement the method in the embodiments of the present invention, this embodiment of the present invention puts forward a transceiver different from an existing WLAN device. Before the transceiver in this embodiment of the present invention is described, an existing transceiver is described. The transceiver shown in FIG. 24 includes a transmit path and a receive path. Specifically, the transmit path mainly includes modules such as a digital baseband signal sending processing unit, a digital to analog converter (Digital to Analog Converter, DAC for short), a low-pass filter (Low Pass Filter, LPF for short), an upconverter, a power amplifier (Power Amplifier, PA for short), and an antenna. The receive path mainly includes modules such as an antenna, a low noise amplifier (Low Noise Amplifier, LNA for short), a downconverter, an LPF, an analog to digital converter (Analog to Digital Converter, ADC for short), and a digital baseband signal receiving processing unit. As previously mentioned, in an existing WLAN system, the transmit path and the receive path of the WLAN device always work alternately instead of simultaneously. Therefore, one transmit path and one receive path may share one antenna by using a 1-of-2 radio frequency switch. In addition, the WLAN device transmits and receives signals on one channel, carrier frequencies of all transmit paths and all receive paths are the same; therefore, upconverters of all the transmit paths and downconverters of all the receive paths use one local-frequency signal, for example, a local-frequency signal whose carrier frequency is f₀ and that is output after a reference frequency signal of a reference frequency source (which is typically a crystal oscillator) passes through a phase-locked loop (Phase-Locked Loop, PLL for short) in FIG. 24.

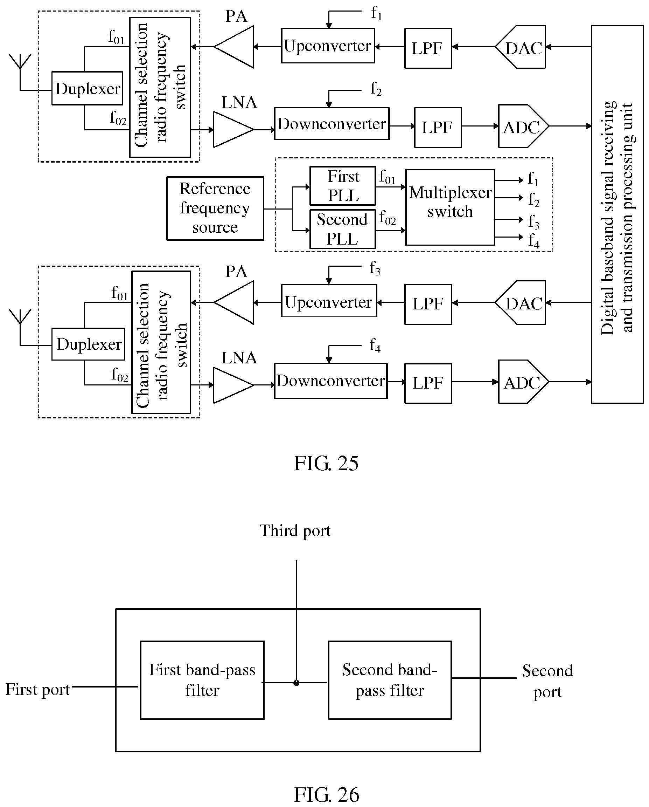

Because the existing transceiver cannot implement parallel uplink and downlink transmission, an embodiment of the present invention provides a new transceiver. Specifically, as shown in FIG. 25, in addition to a transmit path and a receive path, the transceiver in this embodiment of the present invention further includes a first phase-locked loop PLL, a second PLL, a multiplexer switch, a channel selection radio frequency switch, and a duplexer. The multiplexer switch is connected to the first PLL and the second PLL and is configured to provide a local-frequency signal for the transmit path and the receive path. The channel selection radio frequency switch is connected to a PA of the transmit path, an LNA of the receive path, and the duplexer, and is configured to select ports of the duplexer for the transmit path and the receive path, and the duplexer is connected to an antenna, so that the transmit path and the receive path share the antenna.

Optionally, the first PLL and the second PLL respectively provide a first frequency signal and a second frequency signal according to a same reference frequency, the transmit path and the receive path use either the first frequency signal or the second frequency signal to transmit data, and when the transmit path uses the first frequency signal to transmit data, the receive path uses the second frequency signal to transmit data, or when the transmit path uses the second frequency signal to transmit data, the receive path uses the first frequency signal to transmit data.

Optionally, the duplexer includes a first port, a second port, a third port, a first band-pass filter, and a second band-pass filter. The first port is connected to the first band-pass filter, the second port is connected to the second band-pass filter, and the third port is connected to the first band-pass filter and the second band-pass filter. The first port and the second port are configured to connect to the transmit path and the receive path, the third port is configured to connect to the antenna, the first band-pass filter is configured to conduct the first frequency signal, and the second band-pass filter is configured to conduct the second frequency signal.

Optionally, when the transmit path uses the first frequency signal to transmit data on a first channel, and the receive path uses the second frequency signal to transmit data on a second channel, an output end of the PA of the transmit path is connected to the first port, and an input end of the LNA of the receive path is connected to the second port.

Alternatively, when the transmit path uses the second frequency signal to transmit data on a second channel, and the receive path uses the first frequency signal to transmit data on a first channel, an output end of the PA of the transmit path is connected to the second port, and an input end of the LNA of the receive path is connected to the first port.

For example, to implement parallel uplink and downlink transmission put forward in the present invention, the transceiver of the existing WLAN device needs to be improved. A transmit path and a receive path of a WLAN device that performs parallel uplink and downlink transmission may work on channels with different carrier frequencies within different times. During a period of sending a triggering frame, a part of the transmit path of the AP works on the first channel, and another part of the transmit path of the AP works on the second channel. Only after an SIFS time, the entire transmit path of the AP works on the first channel, then after another SIFS time, is switched to the second channel, and after still another SIFS time, is switched back to the first channel. Because a typical SIFS time is 16 microseconds, but the PLL usually requires hundreds of microseconds or even several milliseconds to switch from one frequency to another frequency, as shown in FIG. 25, two PLLs are used to provide two carrier signals that are based on one reference frequency and whose frequencies are f₀₁ and f₀₂, and then a multiplexer switch provides a local-frequency signal for each transmit path and receive path. A local-frequency signal of any transmit path or receive path may be selected as a carrier signal whose frequency is f₀₁ or f₀₂. In this way, an output frequency of a PLL does not need to be dynamically changed, and any transmit path or receive path can implement quick channel switch.

Due to parallel uplink and downlink transmission, a duplexer (Duplexer) is used to make a transmit path and a receive path that work at different carrier frequencies share one antenna. FIG. 26 shows a typical duplexer structure. A first port and a second port are configured to connect to the transmit path and the receive path. A third port is configured to connect to the antenna. A first band-pass filter 1 allows only a signal on a first channel whose carrier frequency is f₀₁ to be passed through, including to be input from the first port and output from the third port, or to be input from the third port and output from the first port. A second band-pass filter 2 allows only a signal on a second channel whose carrier frequency is f₀₂ to be passed through, including to be input from the second port and output from the third port, or to be input from the third port and output from the second port. As shown in FIG. 25, a four-port channel selection radio frequency switch is disposed between an output end of a PA of the transmit path, an input end of an LNA of the receive path, and the first port and the second port of the duplexer. A function of the radio frequency switch is that: If the transmit path works on the first channel whose carrier frequency is f₀₁, and the receive path works on the second channel whose carrier frequency is f₀₂, the output end of the PA of the transmit path is connected to the first port of the duplexer, and the input end of the LNA of the receive path is connected to the second port of the duplexer; if the transmit path works on the second channel whose carrier frequency is f₀₂, and the receive path works on the first channel whose carrier frequency is f₀₁, the output end of the PA of the transmit path is connected to the second port of the duplexer, and the input end of the LNA of the receive path is connected to the first port of the duplexer.

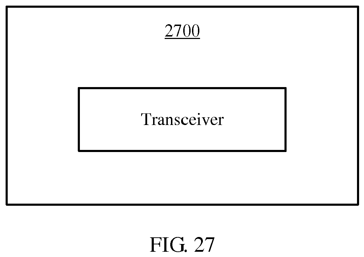

FIG. 27 shows a device according to an embodiment of the present invention. The device 2700 includes the transceiver shown in FIG. 26.

Optionally, the device 2700 may be an access point or a station.

It should be understood that "one embodiment" or "an embodiment" mentioned throughout the specification indicates that a particular characteristic, structure or property that is related to the embodiment is included in at least one embodiment of the present invention. Therefore, "in one embodiment" or "in an embodiment" that appears throughput the entire description does not necessarily mean a same embodiment. Moreover, the specific property, structure, or property may be combined in one or more embodiments in any proper manner. It should be understood that sequence numbers of the foregoing processes do not mean execution sequences in various embodiments of the present invention. The execution sequences of the processes should be determined according to functions and internal logic of the processes, and should not be construed as any limitation on the implementation processes of the embodiments of the present invention.

In addition, the terms "system" and "network" may be used interchangeably in this specification. The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that in the embodiments of the present invention, "B corresponding to A" indicates that B is associated with A, and B may be determined according to A. However, it should further be understood that determining B according to A does not mean that B is determined according to A only; that is, B may also be determined according to A and/or other information.

A person of ordinary skill in the art may be aware that, in combination with the examples described in the embodiments disclosed in this specification, units and algorithm steps may be implemented by electronic hardware, computer software, or a combination thereof. To clearly describe the interchangeability between the hardware and the software, the foregoing has generally described compositions and steps of each example according to functions. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be indirect couplings or communication connections through some interfaces, apparatuses, or units, or may be connections in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments of the present invention.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

With descriptions of the foregoing embodiments, a person skilled in the art may clearly understand that the present invention may be implemented by hardware, firmware or a combination thereof. When the present invention is implemented by software, the foregoing functions may be stored in a computer-readable medium or transmitted as one or more instructions or code in the computer-readable medium. The computer-readable medium includes a computer storage medium and a communications medium, where the communications medium includes any medium that enables a computer program to be transmitted from one place to another. The storage medium may be any available medium accessible to a computer. The following provides an example but does not impose a limitation: The computer-readable medium may include a RAM, a ROM, an EEPROM, a CD-ROM, or another optical disc storage or disk storage medium, or another magnetic storage device, or any other medium that can carry or store expected program code in a form of an instruction or a data structure and can be accessed by a computer. In addition, any connection may be appropriately defined as a computer-readable medium. For example, if software is transmitted from a website, a server or another remote source by using a coaxial cable, an optical fiber/cable, a twisted pair, a digital subscriber line (DSL) or wireless technologies such as infrared ray, radio and microwave, the coaxial cable, optical fiber/cable, twisted pair, DSL or wireless technologies such as infrared ray, radio and microwave are included in a definition of a medium to which they belong. For example, a disk (Disk) and disc (disc) used by the present invention includes a compact disc (CD), a laser disc, an optical disc, a digital versatile disc (DVD), a floppy disk and a Blu-ray disc, where the disk generally copies data by a magnetic means, and the disc copies data optically by a laser means. The foregoing combination should also be included in the protection scope of the computer-readable medium.

In conclusion, what is described above is merely example embodiments of the technical solutions of the present invention, but is not intended to limit the protection scope of the present invention. Any modification, equivalent replacement, or improvement made without departing from the principle of the present invention shall fall within the protection scope of the present invention.

## Claims

1. A data transmission method for an access point, wherein a transceiver of the access point comprises m transmit paths and n receive paths, the method is applied to a wireless local area network, WLAN, and the method comprises:
sending (610; 710), by the access point, downlink data to at least one first station on a first channel, by using at least one of the m transmit paths within a first time;
receiving (620; 720), by the access point, uplink data sent by at least one second station on a second channel, by using at least one of the n receive paths within the first time; wherein,
a start time point and an end time point at which the access point sends the downlink data are respectively the same as those at which the access point receives the uplink data;
performing (730; 740), by the access point, uplink or downlink transmission on the first channel within a preset time; and
performing (730; 740), by the access point, uplink or downlink transmission on the second channel within the preset time, wherein
the preset time is a time other than the first time, and when the access point performs uplink transmission on the first channel within the preset time, the access point performs downlink transmission on the second channel within the preset time, or when the access point performs downlink transmission on the first channel within the preset time, the access point performs uplink transmission on the second channel within the preset time;
**characterized in that**
the preset time comprises a second time, the second time is a time before a start time point of the first time, and the performing, by the access point, uplink or downlink transmission on the first channel within a preset time comprises:
performing, by the access point, clear channel assessment ,CCA, by using a first receive path within the second time and determining that the first channel is idle; and
the performing, by the access point, uplink or downlink transmission on the second channel within the preset time comprises:
performing, by the access point, clear channel assessment, CCA, by using a second receive path within the second time and determining that the second channel is idle, wherein
the first receive path is at least one of any n-1 receive paths of the n receive paths, and the second receive path is at least one of the n receive paths except the first receive path.

2. The method according to claim 1, wherein
the sending, by the access point, downlink data to at least one first station on a first channel by using at least one of the m transmit paths within a first time comprises:
sending the downlink data to the at least one first station on the first channel by using the m transmit paths within the first time; and
receiving, by the access point, uplink data sent by at least one second station on a second channel, by using at least one of the n receive paths within the first time comprises:
receiving, by the access point, uplink data sent by at least one second station on a second channel, by using the n receive paths within the first time.

3. The method according to claim 1 or 2, wherein the preset time further comprises a third time, and the third time is a time between an end time point of the second time and the start time point of the first time;
the performing, by the access point, uplink or downlink transmission on the first channel within a preset time further comprises:
sending, by the access point, a first triggering frame to the at least one first station on the first channel by using a first transmit path within the third time, wherein the first triggering frame is used to instruct the at least one first station to receive, on the first channel within the first time, the downlink data sent by the access point; and
the performing, by the access point, uplink or downlink transmission on the second channel within the preset time further comprises:
sending, by the access point, a second triggering frame to the at least one second station on the second channel by using a second transmit path within the third time, wherein the second triggering frame is used to instruct the at least one second station to send the uplink data to the access point on the second channel within the first time, wherein
the first transmit path is at least one of any m-1 transmit paths of the m transmit paths, and the second transmit path is at least one of the m transmit paths except the first transmit path.

4. The method according to claim 3, wherein
the first triggering frame comprises first scheduling control information, wherein the first scheduling control information comprises: an identifier of each station of the at least one first station, a transmission resource used by the at least one first station to transmit data, a quantity of spatial flows, identifiers of the corresponding spatial flows, and modulation and coding scheme MCS information used for transmitting the corresponding spatial flows, and the first scheduling control information is located in a MAC protocol data unit PDU in a high-efficiency signaling-B field HE-SIG-B or a data field at a physical layer of the first triggering frame; and
the second triggering frame comprises second scheduling control information, wherein the second scheduling control information comprises: an identifier of each station of the at least one second station, a transmission resource used by the at least one second station to transmit data, a quantity of spatial flows, identifiers of the corresponding spatial flows, and modulation and coding scheme MCS information used for transmitting the corresponding spatial flows, and the second scheduling control information is located in a MAC protocol data unit PDU in a high-efficiency signaling-B field HE-SIG-B or a data field at a physical layer of the second triggering frame.

5. The method according to claim 3 or 4, wherein the preset time further comprises a fourth time, the fourth time is a time after an end time point of the first time, and the performing, by the access point, uplink or downlink transmission on the first channel within a preset time further comprises:
using, by the access point, at least one of the n receive paths within the fourth time to receive, on the first channel, a first acknowledgement message sent by the at least one first station, wherein the first acknowledgement message is used to indicate that the at least one first station has correctly received the downlink data; and
the performing, by the access point, uplink or downlink transmission on the second channel within the preset time further comprises:
using, by the access point, at least one of the m transmit paths within the fourth time to send a second acknowledgement message to the at least one second station on the second channel, wherein the second acknowledgement message is used to indicate that the access point has correctly received the uplink data.

6. The method according to claim 5, wherein the preset time further comprises a fifth time and a sixth time, the fifth time is a time after an end time point of the fourth time, and the sixth time is a time after an end time point of the fifth time;
the first triggering frame is further used to instruct at least one third station to send third uplink data to the access point on the first channel within the fifth time;
the second triggering frame is further used to instruct at least one fourth station to receive, on the second channel within the fifth time, fourth downlink data sent by the access point;
the performing, by the access point, uplink or downlink transmission on the first channel within a preset time further comprises:
using, by the access point, at least one of the m receive paths within the fifth time to receive, on the first channel, the third uplink data sent by the at least one third station; and
using, by the access point, at least one of the n transmit paths within the sixth time to send a third acknowledgement message to the at least one third station on the first channel, wherein the third acknowledgement message is used to indicate that the access point has correctly received the third uplink data; and
the performing, by the access point, uplink or downlink transmission on the second channel within the preset time further comprises:
using, by the access point, at least one of the n transmit paths within the fifth time to send the fourth downlink data to the at least one fourth station on the second channel; and
using, by the access point, at least one of the m receive paths within the sixth time to receive, on the second channel, a fourth acknowledgement message sent by the at least one fourth station, wherein the fourth acknowledgement message is used to indicate that the at least one fourth station has correctly received the fourth downlink data.

7. An access point, wherein the access point comprises: a transceiver, a memory, and a processor; the transceiver is configured to communicate with a network element; the memory is configured to store computer code for execution by the processor, the computer code including instructions to:
sending (610; 710), by the access point, downlink data to at least one first station on a first channel, by using at least one of m transmit paths within a first time;
receiving (620; 720), by the access point, uplink data sent by at least one second station on a second channel, by using at least one of n receive paths within the first time; wherein,
a start time point and an end time point at which the access point sends the downlink data are respectively the same as those at which the access point receives the uplink data; performing (730; 740) uplink or downlink transmission on the first channel within a preset time; and
performing (730; 740) uplink or downlink transmission on the second channel within the preset time, wherein
the preset time is a time other than the first time, and when the first transmission unit performs uplink transmission on the first channel within the preset time, the second transmission unit performs downlink transmission on the second channel within the preset time, or when the first transmission unit performs downlink transmission on the first channel within the preset time, the second transmission unit performs uplink transmission on the second channel within the preset time;
**characterized in that**
the preset time comprises a second time, the second time is a time before a start time point of the first time, and the performing, by the access point, uplink or downlink transmission on the first channel within a preset time comprises:
performing, by the access point, clear channel assessment ,CCA, by using a first receive path within the second time and determining that the first channel is idle; and
the performing, by the access point, uplink or downlink transmission on the second channel within the preset time comprises:
performing, by the access point, clear channel assessment, CCA, by using a second receive path within the second time and determining that the second channel is idle, wherein
the first receive path is at least one of any n-1 receive paths of the n receive paths, and the second receive path is at least one of the n receive paths except the first receive path.

## Patentansprüche

1. Datenübertragungsverfahren für einen Zugriffspunkt, wobei ein Sendeempfänger des Zugriffspunkts m Übertragungspfade und n Empfangspfade umfasst, wobei das Verfahren auf ein drahtloses lokales Netzwerk (wireless local area network - WLAN) angewendet wird und das Verfahren Folgendes umfasst:
Senden (610; 710) von Downlink-Daten unter Verwendung von zumindest einem der m Übertragungspfade durch den Zugriffspunkt an zumindest eine erste Station auf einem ersten Kanal innerhalb eines ersten Zeitraums;
Empfangen (620; 720) von Uplink-Daten, die durch zumindest eine zweite Station auf einem zweiten Kanal gesendet wurden, unter Verwendung von zumindest einem der n Empfangspfade durch den Zugriffspunkt innerhalb des ersten Zeitraums; wobei ein Startzeitpunkt und ein Endzeitpunkt, zu denen der Zugriffspunkt die Downlink-Daten sendet, jeweils dieselben sind wie die, zu denen der Zugriffspunkt die Uplink-Daten empfängt;
Durchführen (730; 740) einer Uplink- oder Downlink-Übertragung auf dem ersten Kanal durch den Zugriffspunkt innerhalb eines voreingestellten Zeitraums; und
Durchführen (730; 740) einer Uplink- oder Downlink-Übertragung auf dem zweiten Kanal durch den Zugriffspunkt innerhalb des voreingestellten Zeitraums, wobei
der voreingestellte Zeitraum ein anderer Zeitraum ist als der erste Zeitraum und der Zugriffspunkt eine Downlink-Übertragung auf dem zweiten Kanal innerhalb des voreingestellten Zeitraums durchführt, wenn der Zugriffspunkt eine Uplink-Übertragung auf dem ersten Kanal innerhalb des voreingestellten Zeitraums durchführt, oder der Zugriffspunkt eine Uplink-Übertragung auf dem zweiten Kanal innerhalb des voreingestellten Zeitraums durchführt, wenn der Zugriffspunkt eine Downlink-Übertragung auf dem ersten Kanal innerhalb des voreingestellten Zeitraums durchführt;
**dadurch gekennzeichnet, dass**
der voreingestellte Zeitraum einen zweiten Zeitraum umfasst, wobei der zweite Zeitraum ein Zeitraum vor einem Startzeitpunkt des ersten Zeitraums ist, und das Durchführen einer Uplink- oder Downlink-Übertragung auf dem ersten Kanal durch den Zugriffspunkt innerhalb eines voreingestellten Zeitraums Folgendes umfasst:
Durchführen einer Freikanalanalyse (clear channel assessment - CCA) unter Verwendung eines ersten Empfangspfades durch den Zugriffspunkt innerhalb des zweiten Zeitraums und Bestimmen, dass der erste Kanal inaktiv ist; und
wobei das Durchführen einer Uplink- oder Downlink-Übertragung auf dem zweiten Kanal durch den Zugriffspunkt innerhalb des voreingestellten Zeitraums Folgendes umfasst:
Durchführen einer Freikanalanalyse (clear channel assessment - CCA) unter Verwendung eines zweiten Empfangspfades durch den Zugriffspunkt innerhalb des zweiten Zeitraums und Bestimmen, dass der zweite Kanal inaktiv ist, wobei
der erste Empfangspfad zumindest einer von beliebigen n-1 Empfangspfaden der n Empfangspfade ist und der zweite Empfangspfad zumindest einer der n Empfangspfade ist, mit Ausnahme des ersten Empfangspfades.

2. Verfahren nach Anspruch 1, wobei
das Senden von Downlink-Daten unter Verwendung von zumindest einem der m Übertragungspfade durch den Zugriffspunkt an zumindest eine erste Station auf einem ersten Kanal innerhalb eines ersten Zeitraums Folgendes umfasst:
Senden der Downlink-Daten unter Verwendung der m Übertragungspfade an die zumindest eine erste Station auf dem ersten Kanal innerhalb des ersten Zeitraums; und
das Empfangen von Uplink-Daten, die durch zumindest eine zweite Station auf einem zweiten Kanal gesendet wurden, unter Verwendung von zumindest einem der n Empfangspfade durch den Zugriffspunkt innerhalb des ersten Zeitraums Folgendes umfasst:
Empfangen von Uplink-Daten, die durch zumindest eine zweite Station auf einem zweiten Kanal gesendet wurden, unter Verwendung von den n Empfangspfade durch den Zugriffspunkt innerhalb des ersten Zeitraums.

3. Verfahren nach Anspruch 1 oder 2, wobei der voreingestellte Zeitraum ferner einen dritten Zeitraum umfasst und der dritte Zeitraum ein Zeitraum zwischen einem Endzeitpunkt des zweiten Zeitraums und dem Startzeitpunkt des ersten Zeitraums ist;
wobei das Durchführen einer Uplink- oder Downlink-Übertragung auf dem ersten Kanal durch den Zugriffspunkt innerhalb eines voreingestellten Zeitraums ferner Folgendes umfasst:
Senden eines ersten Auslöserahmens unter Verwendung eines ersten Übertragungspfades durch den Zugriffspunkt an die zumindest eine erste Station auf dem ersten Kanal innerhalb des dritten Zeitraums, wobei der erste Auslöserahmen verwendet wird, um die zumindest eine erste Station anzuweisen, die Downlink-Daten, die durch den Zugriffspunkt gesendet wurden, auf dem ersten Kanal innerhalb des ersten Zeitraums zu empfangen; und
wobei das Durchführen einer Uplink- oder Downlink-Übertragung auf dem zweiten Kanal durch den Zugriffspunkt innerhalb des voreingestellten Zeitraums ferner Folgendes umfasst:
Senden eines zweiten Auslöserahmens unter Verwendung eines zweiten Übertragungspfades durch den Zugriffspunkt an die zumindest eine zweite Station auf dem zweiten Kanal innerhalb des dritten Zeitraums, wobei der zweite Auslöserahmen verwendet wird, um die zumindest eine zweite Station anzuweisen, die Uplink-Daten auf dem zweiten Kanal innerhalb des ersten Zeitraums an den Zugriffspunkt zu senden, wobei der erste Übertragungspfad zumindest einer von beliebigen m-1 Übertragungspfaden der m Übertragungspfade ist und der zweite Übertragungspfad zumindest einer der m Übertragungspfade ist, mit Ausnahme des ersten Übertragungspfades.

4. Verfahren nach Anspruch 3, wobei
der erste Auslöserahmen erste Planungssteuerungsinformationen umfasst, wobei die ersten Planungssteuerungsinformationen Folgendes umfassen: eine Kennung für jede Station der zumindest einen ersten Station, eine Übertragungsquelle, die durch die zumindest eine erste Station verwendet wird, um Daten zu übertragen, eine Anzahl an räumlichen Flüssen, Kennungen der entsprechenden räumlichen Flüsse und Informationen zu einem Modulations- und Codierschema (MCS), die zum Übertragen der entsprechenden räumlichen Flüsse verwendet werden, und wobei sich die ersten Planungssteuerungsinformationen in einer MAC-Protokolldateneinheit (MAC protocol data unit - MAC-PDU) in einem hocheffizienten Feld der B-Signalisierung (high-efficiency signaling-B field - HE-SIG-B) oder einem Datenfeld an einer physikalischen Schicht des ersten Auslöserahmens befinden; und
der zweite Auslöserahmen zweite Planungssteuerungsinformationen umfasst, wobei die zweiten Planungssteuerungsinformationen Folgendes umfassen: eine Kennung für jede Station der zumindest einen zweiten Station, eine Übertragungsquelle, die durch die zumindest eine zweite Station verwendet wird, um Daten zu übertragen, eine Anzahl an räumlichen Flüssen, Kennungen der entsprechenden räumlichen Flüsse und Informationen zu einem Modulations- und Codierschema (MCS), die zum Übertragen der entsprechenden räumlichen Flüsse verwendet werden, und wobei sich die zweiten Planungssteuerungsinformationen in einer MAC-Protokolldateneinheit (MAC protocol data unit - MAC-PDU) in einem hocheffizienten Feld der B-Signalisierung (high-efficiency signaling-B field - HE-SIG-B) oder einem Datenfeld an einer physikalischen Schicht des zweiten Auslöserahmens befinden.

5. Verfahren nach einem der Ansprüche 3 oder 4, wobei der voreingestellte Zeitraum ferner einen vierten Zeitraum umfasst, wobei der vierte Zeitraum ein Zeitraum nach einem Endzeitpunkt des ersten Zeitraums ist, und das Durchführen einer Uplink- oder Downlink-Übertragung auf dem ersten Kanal durch den Zugriffspunkt innerhalb eines voreingestellten Zeitraums ferner Folgendes umfasst:
Verwenden von zumindest einem der n Empfangspfade durch den Zugriffspunkt innerhalb des vierten Zeitraums, um eine erste Bestätigungsmeldung, die durch die zumindest eine erste Station gesendet wurde, auf dem ersten Kanal zu empfangen, wobei die erste Bestätigungsmeldung verwendet wird, um anzugeben, dass die zumindest eine erste Station die Downlink-Daten ordnungsgemäß empfangen hat; und
wobei das Durchführen einer Uplink- oder Downlink-Übertragung auf dem zweiten Kanal durch den Zugriffspunkt innerhalb des voreingestellten Zeitraums ferner Folgendes umfasst:
Verwenden von zumindest einem der m Übertragungspfade durch den Zugriffspunkt innerhalb des vierten Zeitraums, um eine zweite Bestätigungsmeldung an die zumindest eine zweite Station auf dem zweiten Kanal zu senden, wobei die zweite Bestätigungsmeldung verwendet wird, um anzugeben, dass der Zugriffspunkt die Uplink-Daten ordnungsgemäß empfangen hat.

6. Verfahren nach Anspruch 5, wobei der voreingestellte Zeitraum ferner einen fünften Zeitraum und einen sechsten Zeitraum umfasst, wobei der fünfte Zeitraum ein Zeitraum nach einem Endzeitpunkt des vierten Zeitraums ist und der sechste Zeitraum ein Zeitraum nach einem Endzeitpunkt des fünften Zeitraums ist;
wobei der erste Auslöserahmen ferner verwendet wird, um zumindest eine dritte Station anzuweisen, dritte Uplink-Daten auf dem ersten Kanal innerhalb des fünften Zeitraums zu dem Zugriffspunkt zu senden;
wobei der zweite Auslöserahmen ferner verwendet wird, um zumindest eine vierte Station anzuweisen, auf dem zweiten Kanal innerhalb des fünften Zeitraums vierte Downlink-Daten zu empfangen, die durch den Zugriffspunkt gesendet wurden;
wobei das Durchführen einer Uplink- oder Downlink-Übertragung auf dem ersten Kanal durch den Zugriffspunkt innerhalb eines voreingestellten Zeitraums ferner Folgendes umfasst:
Verwenden von zumindest einem der m Empfangspfade durch den Zugriffspunkt innerhalb des fünften Zeitraums, um die dritten Uplink-Daten, die durch die zumindest eine dritte Station gesendet wurden, auf dem ersten Kanal zu empfangen; und
Verwenden von zumindest einem der n Übertragungspfade durch den Zugriffspunkt innerhalb des sechsten Zeitraums, um eine dritte Bestätigungsmeldung an die zumindest eine dritte Station auf dem ersten Kanal zu senden, wobei die dritte Bestätigungsmeldung verwendet wird, um anzugeben, dass der Zugriffspunkt die dritten Uplink-Daten ordnungsgemäß empfangen hat; und
wobei das Durchführen einer Uplink- oder Downlink-Übertragung auf dem zweiten Kanal durch den Zugriffspunkt innerhalb des voreingestellten Zeitraums ferner Folgendes umfasst:
Verwenden von zumindest einem der n Übertragungspfade durch den Zugriffspunkt innerhalb des fünften Zeitraums, um die vierten Downlink-Daten an die zumindest eine vierte Station auf dem zweiten Kanal zu senden; und
Verwenden von zumindest einem der m Empfangspfade durch den Zugriffspunkt innerhalb des sechsten Zeitraums, um eine vierte Bestätigungsmeldung, die durch die zumindest eine vierte Station gesendet wurde, auf dem zweiten Kanal zu empfangen, wobei die vierte Bestätigungsmeldung verwendet wird, um anzugeben, dass die zumindest eine vierte Station die Downlink-Daten ordnungsgemäß empfangen hat.

7. Zugriffspunkt, wobei der Zugriffspunkt Folgendes umfasst: einen Sendeempfänger, einen Speicher und einen Prozessor; wobei der Sendeempfänger konfiguriert ist, um mit einem Netzelement zu kommunizieren, wobei der Speicher konfiguriert ist, um Computercode zur Ausführung durch den Prozessor zu speichern, wobei der Computercode Anweisungen zu Folgendem beinhaltet:
Senden (610; 710) von Downlink-Daten unter Verwendung von zumindest einem der m Übertragungspfade durch den Zugriffspunkt an zumindest eine erste Station auf einem ersten Kanal innerhalb eines ersten Zeitraums;
Empfangen (620; 720) von Uplink-Daten, die durch zumindest eine zweite Station auf einem zweiten Kanal gesendet wurden, unter Verwendung von zumindest einem der n Empfangspfade durch den Zugriffspunkt innerhalb des ersten Zeitraums; wobei ein Startzeitpunkt und ein Endzeitpunkt, zu denen der Zugriffspunkt die Downlink-Daten sendet, jeweils dieselben sind wie die, zu denen der Zugriffspunkt die Uplink-Daten empfängt;
Durchführen (730; 740) einer Uplink- oder Downlink-Übertragung auf dem ersten Kanal innerhalb eines voreingestellten Zeitraums; und
Durchführen (730; 740) einer Uplink- oder Downlink-Übertragung auf dem zweiten Kanal innerhalb des voreingestellten Zeitraums, wobei
der voreingestellte Zeitraum ein anderer Zeitraum ist als der erste Zeitraum und die zweite Übertragungseinheit eine Downlink-Übertragung auf dem zweiten Kanal innerhalb des voreingestellten Zeitraums durchführt, wenn die erste Übertragungseinheit eine Uplink-Übertragung auf dem ersten Kanal innerhalb des voreingestellten Zeitraums durchführt, oder die zweite Übertragungseinheit eine Uplink-Übertragung auf dem zweiten Kanal innerhalb des voreingestellten Zeitraums durchführt, wenn die erste Übertragungseinheit eine Downlink-Übertragung auf dem ersten Kanal innerhalb des voreingestellten Zeitraums durchführt;
**dadurch gekennzeichnet, dass**
der voreingestellte Zeitraum einen zweiten Zeitraum umfasst, wobei der zweite Zeitraum ein Zeitraum vor einem Startzeitpunkt des ersten Zeitraums ist, und das Durchführen einer Uplink- oder Downlink-Übertragung auf dem ersten Kanal durch den Zugriffspunkt innerhalb eines voreingestellten Zeitraums Folgendes umfasst:
Durchführen einer Freikanalanalyse (clear channel assessment - CCA) unter Verwendung eines ersten Empfangspfades durch den Zugriffspunkt innerhalb des zweiten Zeitraums und Bestimmen, dass der erste Kanal inaktiv ist; und
wobei das Durchführen einer Uplink- oder Downlink-Übertragung auf dem zweiten Kanal durch den Zugriffspunkt innerhalb des voreingestellten Zeitraums Folgendes umfasst:
Durchführen einer Freikanalanalyse (clear channel assessment - CCA) unter Verwendung eines zweiten Empfangspfades durch den Zugriffspunkt innerhalb des zweiten Zeitraums und Bestimmen, dass der zweite Kanal inaktiv ist, wobei
der erste Empfangspfad zumindest einer von beliebigen n-1 Empfangspfaden der n Empfangspfade ist und der zweite Empfangspfad zumindest einer der n Empfangspfade ist, mit Ausnahme des ersten Empfangspfades.

## Revendications

1. Procédé de transmission de données pour un point d'accès, dans lequel un émetteur-récepteur du point d'accès comprend m chemins de transmission et n chemins de réception, le procédé est appliqué à un réseau local sans fil, WLAN, et le procédé comprend :
l'envoi (610 ; 710), par le point d'accès, de données de liaison descendante à au moins une première station sur un premier canal, en utilisant au moins un des m chemins de transmission dans un premier temps ;
la réception (620 ; 720), par le point d'accès, de données de liaison montante envoyées par au moins une deuxième station sur un deuxième canal, en utilisant au moins un des n chemins de réception dans le premier temps ; dans lequel un point temporel de début et un point temporel de fin auxquels le point d'accès envoie les données de liaison descendante sont respectivement les mêmes que ceux auxquels le point d'accès reçoit les données de liaison montante ;
l'exécution (730 ; 740), par le point d'accès, d'une transmission de liaison montante ou de liaison descendante sur le premier canal dans un temps prédéfini ; et
l'exécution (730 ; 740), par le point d'accès, d'une transmission de liaison montante ou de liaison descendante sur le deuxième canal dans le temps prédéfini, dans lequel
le temps prédéfini est un temps autre que le premier temps et quand le point d'accès effectue une transmission de liaison montante sur le premier canal dans le temps prédéfini, le point d'accès effectue une transmission de liaison descendante sur le deuxième canal dans le temps prédéfini, ou quand le point d'accès effectue une transmission de liaison descendante sur le premier canal dans le temps prédéfini, le point d'accès effectue une transmission de liaison montante sur le deuxième canal dans le temps prédéfini ;
**caractérisé en ce que**
le temps prédéfini comprend un deuxième temps, le deuxième temps est un temps avant un point temporel de début du premier temps, et l'exécution, par le point d'accès, d'une transmission de liaison montante ou de liaison descendante sur le premier canal dans un temps prédéfini comprend :
l'exécution, par le point d'accès, d'une évaluation de canal libre, CCA, en utilisant un premier chemin de réception dans le deuxième temps et en déterminant que le premier canal est inactif ; et
l'exécution, par le point d'accès, d'une transmission de liaison montante ou de liaison descendante sur le deuxième canal dans le temps prédéfini comprend :
l'exécution, par le point d'accès, d'une évaluation de canal libre, CCA, en utilisant un deuxième chemin de réception dans le deuxième temps et en déterminant que le deuxième canal est inactif, dans lequel
le premier chemin de réception est au moins un de n'importe quels n-1 chemins de réception des n chemins de réception et le deuxième chemin de réception est au moins un des n chemins de réception à l'exception du premier chemin de réception.

2. Procédé selon la revendication 1, dans lequel
l'envoi, par le point d'accès, de données de liaison descendante à au moins une première station sur un premier canal en utilisant au moins un des m chemins de transmission dans un premier temps comprend :
l'envoi des données de liaison descendante à l'au moins une première station sur le premier canal, en utilisant les m chemins de transmission dans le premier temps ; et
la réception, par le point d'accès, de données de liaison montante envoyées par au moins une deuxième station sur un deuxième canal, en utilisant au moins un des n chemins de réception dans le premier temps comprend :
la réception, par le point d'accès, de données de liaison montante envoyées par au moins une deuxième station sur un deuxième canal, en utilisant les n chemins de réception dans le premier temps.

3. Procédé selon la revendication 1 ou 2, dans lequel le temps prédéfini comprend en outre un troisième temps, et le troisième temps est un temps entre le point temporel de fin du deuxième temps et le point temporel de début du premier temps ; l'exécution, par le point d'accès, d'une transmission de liaison montante ou de liaison descendante sur le premier canal dans un temps prédéfini comprend en outre :
l'envoi, par le point d'accès, d'une première trame de déclenchement à l'au moins une première station sur le premier canal en utilisant un premier chemin de transmission dans le troisième temps, dans lequel la première trame de déclenchement est utilisée pour donner instruction à l'au moins une première station de recevoir, sur le premier canal dans le premier temps, les données de liaison descendante envoyées par le point d'accès ; et
l'exécution, par le point d'accès, d'une transmission de liaison montante ou de liaison descendante sur le deuxième canal dans un temps prédéfini comprend en outre :
l'envoi, par le point d'accès, d'une deuxième trame de déclenchement à l'au moins une deuxième station sur le deuxième canal en utilisant un deuxième chemin de transmission dans le troisième temps, dans lequel la deuxième trame de déclenchement est utilisée pour donner instruction à l'au moins une deuxième station d'envoyer les données de liaison montante au point d'accès, sur le deuxième canal dans le deuxième temps, dans lequel
le premier chemin de transmission est au moins un de n'importe quels m-1 chemins de transmission des m chemins de transmission et le deuxième chemin de transmission est au moins un des m chemins de transmission à l'exception du premier chemin de transmission.

4. Procédé selon la revendication 3, dans lequel
la première trame de déclenchement comprend des premières informations de commande de planification, dans lequel les premières informations de commande de planification comprennent : un identificateur de chaque station de l'au moins une première station, une ressource de transmission utilisée par l'au moins une première station pour transmettre des données, une quantité de flux spatiaux, des identificateurs des flux spatiaux correspondants, et des informations de schéma de modulation et de codage MCS utilisées pour transmettre les flux spatiaux correspondants, et les premières informations de commande de planification sont situées dans une unité de données de protocole PDU MAC dans un champ B de signalisation de haut rendement HE-SIG-B ou un champ de données au niveau d'une couche physique de la première trame de déclenchement ; et
la deuxième trame de déclenchement comprend des deuxièmes informations de commande de planification, dans lequel les deuxièmes informations de commande de planification comprennent : un identificateur de chaque station de l'au moins une deuxième station, une ressource de transmission utilisée par l'au moins une deuxième station pour transmettre des données, une quantité de flux spatiaux, des identificateurs des flux spatiaux correspondants, et des informations de schéma de modulation et de codage MCS utilisées pour transmettre les flux spatiaux correspondants, et les deuxièmes informations de commande de planification sont situées dans une unité de données de protocole PDU MAC dans un champ B de signalisation de haut rendement HE-SIG-B ou un champ de données au niveau d'une couche physique de la deuxième trame de déclenchement.

5. Procédé selon la revendication 3 ou 4, dans lequel le temps prédéfini comprend en outre un quatrième temps, le quatrième temps est un temps après un point temporel de fin du premier temps, et l'exécution, par le point d'accès, d'une transmission de liaison montante ou de liaison descendante sur le premier canal dans un temps prédéfini comprend en outre :
l'utilisation, par le point d'accès, d'au moins un des n chemins de réception dans le quatrième temps pour recevoir, sur le premier canal, un premier message d'accusé de réception envoyé par l'au moins une première station, dans lequel le premier message d'accusé de réception est utilisé pour indiquer que l'au moins une première station a reçu correctement les données de liaison descendante ; et
l'exécution, par le point d'accès, d'une transmission de liaison montante ou de liaison descendante sur le deuxième canal dans le temps prédéfini comprend en outre :
l'utilisation, par le point d'accès, d'au moins un des m chemins de transmission dans le quatrième temps pour envoyer un deuxième message d'accusé de réception à l'au moins une deuxième station sur le deuxième canal, dans lequel le deuxième message d'accusé de réception est utilisé pour indiquer que le point d'accès a reçu correctement les données de liaison montante.

6. Procédé selon la revendication 5, dans lequel le temps prédéfini comprend en outre un cinquième temps et un sixième temps, le cinquième temps est un temps après un point temporel de fin du quatrième temps et le sixième temps est un temps après un point temporel de fin du cinquième temps ;
la première trame de déclenchement est utilisée en outre pour donner instruction à au moins une troisième station d'envoyer des troisièmes données de liaison montante au point d'accès sur le premier canal dans le cinquième temps ;
la deuxième trame de déclenchement est utilisée en outre pour donner instruction à au moins une quatrième station de recevoir, sur le deuxième canal dans le cinquième temps, des quatrièmes données de liaison descendante envoyées par le point d'accès ;
l'exécution, par le point d'accès, d'une transmission de liaison montante ou de liaison descendante sur le premier canal dans un temps prédéfini comprend en outre :
l'utilisation, par le point d'accès, d'au moins un des m chemins de réception dans le cinquième temps pour recevoir, sur le premier canal, les troisièmes données de liaison montante envoyées par l'au moins une troisième station ; et
l'utilisation, par le point d'accès, d'au moins un des n chemins de transmission dans le sixième temps pour envoyer un troisième message d'accusé de réception à l'au moins une troisième station sur le premier canal, dans lequel le troisième message d'accusé de réception est utilisé pour indiquer que le point d'accès a reçu correctement les troisièmes données de liaison montante ; et
l'exécution, par le point d'accès, d'une transmission de liaison montante ou de liaison descendante sur le deuxième canal dans le temps prédéfini comprend en outre :
l'utilisation, par le point d'accès, d'au moins un des n chemins de transmission dans le cinquième temps pour envoyer les quatrièmes données de liaison descendante à l'au moins une quatrième station sur le deuxième canal ; et
l'utilisation, par le point d'accès, d'au moins un des m chemins de réception dans le sixième temps pour recevoir, sur le deuxième canal, un quatrième message d'accusé de réception envoyé par l'au moins une quatrième station, dans lequel le quatrième message d'accusé de réception est utilisé pour indiquer que l'au moins une quatrième station a reçu correctement les quatrièmes données de liaison descendante.

7. Point d'accès, dans lequel le point d'accès comprend : un émetteur-récepteur, une mémoire et un processeur ; l'émetteur-récepteur est configuré pour communiquer avec un élément de réseau ; la mémoire est configurée pour stocker un code informatique pour l'exécution par le processeur, le code informatique comprenant des instructions pour :
envoyer (610 ; 710), par le point d'accès, des données de liaison descendante à au moins une première station sur un premier canal, en utilisant au moins un des m chemins de transmission dans un premier temps ;
recevoir (620 ; 720), par le point d'accès, des données de liaison montante envoyées par au moins une deuxième station sur un deuxième canal, en utilisant au moins un des n chemins de réception dans le premier temps ; dans lequel un point temporel de début et un point temporel de fin auxquels le point d'accès envoie les données de liaison descendante sont respectivement les mêmes que ceux auxquels le point d'accès reçoit les données de liaison montante ;
l'exécution (730 ; 740) d'une transmission de liaison montante ou de liaison descendante sur le premier canal dans un temps prédéfini ; et
l'exécution (730 ; 740) d'une transmission de liaison montante ou de liaison descendante sur le deuxième canal dans le temps prédéfini, dans lequel
le temps prédéfini est un temps autre que le premier temps et quand la première unité de transmission effectue une transmission de liaison montante sur le premier canal dans le temps prédéfini, la deuxième unité de transmission effectue une transmission de liaison descendante sur le deuxième canal dans le temps prédéfini, ou quand la première unité de transmission effectue une transmission de liaison descendante sur le premier canal dans le temps prédéfini, la deuxième unité de transmission effectue une transmission de liaison montante sur le deuxième canal dans le temps prédéfini ;
**caractérisé en ce que**
le temps prédéfini comprend un deuxième temps, le deuxième temps est un temps avant un point temporel de début du premier temps, et l'exécution, par le point d'accès, d'une transmission de liaison montante ou de liaison descendante sur le premier canal dans un temps prédéfini comprend :
l'exécution, par le point d'accès, d'une évaluation de canal libre, CCA, en utilisant un premier chemin de réception dans le deuxième temps et en déterminant que le premier canal est inactif ; et
l'exécution, par le point d'accès, d'une transmission de liaison montante ou de liaison descendante sur le deuxième canal dans le temps prédéfini comprend :
l'exécution, par le point d'accès, d'une évaluation de canal libre, CCA, en utilisant un deuxième chemin de réception dans le deuxième temps et en déterminant que le deuxième canal est inactif, dans lequel
le premier chemin de réception est au moins un de n'importe quels n-1 chemins de réception des n chemins de réception et le deuxième chemin de réception est au moins un des n chemins de réception à l'exception du premier chemin de réception.
